(19) Europäisches Patentamt
European Patent Office
Office européen des brevets

(11) **EP 4 691 829 A1**

(12) **EUROPEAN PATENT APPLICATION**
published in accordance with Art. 153(4) EPC

(43) Date of publication:
**11.02.2026 Bulletin 2026/07**

(21) Application number: **24780284.6**

(22) Date of filing: **26.03.2024**

(51) International Patent Classification (IPC):
**B60L 15/20** (2006.01)  **B60L 9/18** (2006.01)

(52) Cooperative Patent Classification (CPC):
**B60L 9/18; B60L 15/20**

(86) International application number:
**PCT/JP2024/011906**

(87) International publication number:
**WO 2024/204171 (03.10.2024 Gazette 2024/40)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **31.03.2023 JP 2023057285**

(71) Applicant: **HONDA MOTOR CO., LTD.**
**Tokyo 105-8404 (JP)**

(72) Inventor: **SAKAGAMI, Kyohei**
**Wako-shi, Saitama 351-0193 (JP)**

(74) Representative: **Weickmann & Weickmann
PartmbB
Postfach 860 820
81635 München (DE)**

(54) **VEHICLE CONTROL DEVICE, VEHICLE, AND VEHICLE CONTROL METHOD**

(57)      A vehicle control device (26) controls a vehicle (10) that is capable of turning using the difference between the wheel speed of a left drive wheel (14L) and the wheel speed of a right drive wheel (14R). The vehicle control device sets the target wheel speeds of the right and left drive wheels within a range corresponding to the allowable slip range of the right and left drive wheels on the basis of a target vehicle speed and a target yaw rate and controls the rotational speeds of the right and left drive motors on the basis of the target wheel speeds of the right and left drive wheels.

FIG. 4

**Description**

TECHNICAL FIELD

The present invention relates to a vehicle control device, a vehicle, and a vehicle control method.

BACKGROUND ART

In JP 6479627 B2, an electrically powered working vehicle (vehicle) is disclosed which calculates a calculated yaw rate from a rotational speed of a left driving wheel and a rotational speed of a right driving wheel, and determines whether or not the driving wheels have slipped from the calculated yaw rate and an actual yaw rate.

SUMMARY OF THE INVENTION

In JP 6479627 B2, although it is disclosed how to determine whether or not the driving wheels are slipping, there is no disclosure concerning a control for suppressing slippage of the driving wheels.
The present invention has the object of solving the aforementioned problem.
A first aspect of the present invention is characterized by a vehicle control device configured to control a vehicle including a left driving motor configured to drive a left driving wheel, and a right driving motor configured to drive a right driving wheel, the vehicle being capable of turning based on a difference between a vehicle wheel speed of the left driving wheel and a vehicle wheel speed of the right driving wheel, the vehicle control device including a target value setting unit configured to set a target vehicle speed and a target yaw rate, an allowable slip range setting unit configured to set an allowable slip range of the left driving wheel based on a left slip determination upper limit value and a left slip determination lower limit value in order to determine a slip of the left driving wheel based on the vehicle wheel speed of the left driving wheel, and to set an allowable slip range of the right driving wheel based on a right slip determination upper limit value and a right slip determination lower limit value in order to determine a slip of the right driving wheel based on the vehicle wheel speed of the right driving wheel, a target vehicle wheel speed setting unit configured to set a target wheel speed of the left driving wheel within a range corresponding to the allowable slip range of the left driving wheel based on the target vehicle speed and the target yaw rate, and to set a target wheel speed of the right driving wheel within a range corresponding to the allowable slip range of the right driving wheel based on the target vehicle speed and the target yaw rate, and a rotational speed control unit configured to control a rotational speed of the left driving motor based on the target vehicle wheel speed of the left driving wheel, and to control a rotational speed of the right driving motor based on the target vehicle wheel speed of the right driving wheel.
A second aspect of the present invention is characterized by a vehicle being capable of turning based on a difference between the vehicle wheel speed of the left driving wheel and the vehicle wheel speed of the right driving wheel, and including the vehicle control device according to the first aspect.
A third aspect of the present invention is characterized by a vehicle control method for controlling a vehicle including a left driving motor configured to drive a left driving wheel, and a right driving motor configured to drive a right driving wheel, the vehicle being capable of turning based on a difference between a vehicle wheel speed of the left driving wheel and a vehicle wheel speed of the right driving wheel, the method including a target value setting step of setting a target vehicle speed and a target yaw rate, an allowable slip range setting step of setting an allowable slip range of the left driving wheel based on a left slip determination upper limit value and a left slip determination lower limit value in order to determine a slip of the left driving wheel based on the vehicle wheel speed of the left driving wheel, and of setting an allowable slip range of the right driving wheel based on a right slip determination upper limit value and a right slip determination lower limit value in order to determine a slip of the right driving wheel based on the vehicle wheel speed of the right driving wheel, a target vehicle wheel speed setting step of setting a target wheel speed of the left driving wheel within a range corresponding to the allowable slip range of the left driving wheel based on the target vehicle speed and the target yaw rate, and of setting a target wheel speed of the right driving wheel within a range corresponding to the allowable slip range of the right driving wheel based on the target vehicle speed and the target yaw rate, and a rotational speed control step of controlling a rotational speed of the left driving motor based on the target vehicle wheel speed of the left driving wheel, and of controlling a rotational speed of the right driving motor based on the target vehicle wheel speed of the right driving wheel.
According to the present invention, slippage of the driving wheels can be suppressed.

BRIEF DESCRIPTION OF DRAWINGS

[FIG. 1] FIG. 1 is a perspective view of a vehicle;

[FIG. 2] FIG. 2 is a block diagram of a vehicle control device;

[FIG. 3] FIG. 3 is a graph showing an allowable slip range;

[FIG. 4] FIG. 4 is a diagram for describing a method of setting a target operating point;

[FIG. 5] FIG. 5 is an image diagram of the method of setting the target operating point;

[FIG. 6] FIG. 6 is a flowchart of a driving motor control performed in the vehicle control device;

[FIG. 7] FIG. 7 is an image diagram of an allowable range;

[FIG. 8] FIG. 8 is a block diagram of the vehicle control device;

[FIG. 9] FIG. 9 is a diagram for describing a target vehicle wheel speed limit range;

[FIG. 10] FIG. 10 is a block diagram of a target vehicle wheel speed limit range setting unit;

[FIG. 11] FIG. 11 is a block diagram of a slip speed correction term initial value calculation unit;

[FIG. 12] FIG. 12 is a block diagram of a target vehicle wheel speed limit value setting unit;

[FIG. 13] FIG. 13 is a diagram showing an example of a change over time of the slip speed correction term;

[FIG. 14] FIG. 14 is a gain map;

[FIG. 15] FIG. 15 is a gain map;

[FIG. 16] FIG. 16 is a flowchart of a driving motor control carried out in the vehicle control device;

[FIG. 17] FIG. 17 is a block diagram of the vehicle control device;

[FIG. 18] FIG. 18 is an image diagram showing a relationship between a vehicle body speed, a vehicle wheel speed of the left driving wheel, and a vehicle wheel speed of the right driving wheel;

[FIG. 19] FIG. 19 is an image diagram showing the relationship between the vehicle body speed, the vehicle wheel speed of the left driving wheel, and the vehicle wheel speed of the right driving wheel;

[FIG. 20] FIG. 20 is an image diagram showing a relationship between the vehicle body speed, the vehicle wheel speed of the left driving wheel, and the vehicle wheel speed of the right driving wheel;

[FIG. 21] FIG. 21 is an image diagram showing a relationship between the vehicle body speed, the vehicle wheel speed of the left driving wheel, and the vehicle wheel speed of the right driving wheel; and

[FIG. 22] FIG. 22 is a flowchart of a vehicle body speed estimation process carried out in the vehicle control device.

DESCRIPTION OF THE INVENTION

[First Embodiment]

A description will be presented below concerning a vehicle control device 26, a vehicle 10 equipped with the vehicle control device 26, and a vehicle control method according to a present embodiment.

[Configuration of Vehicle]

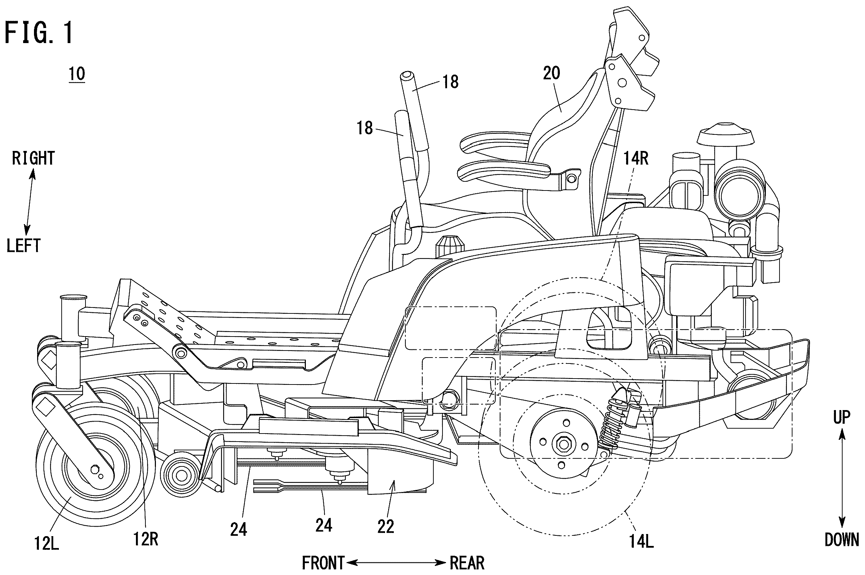

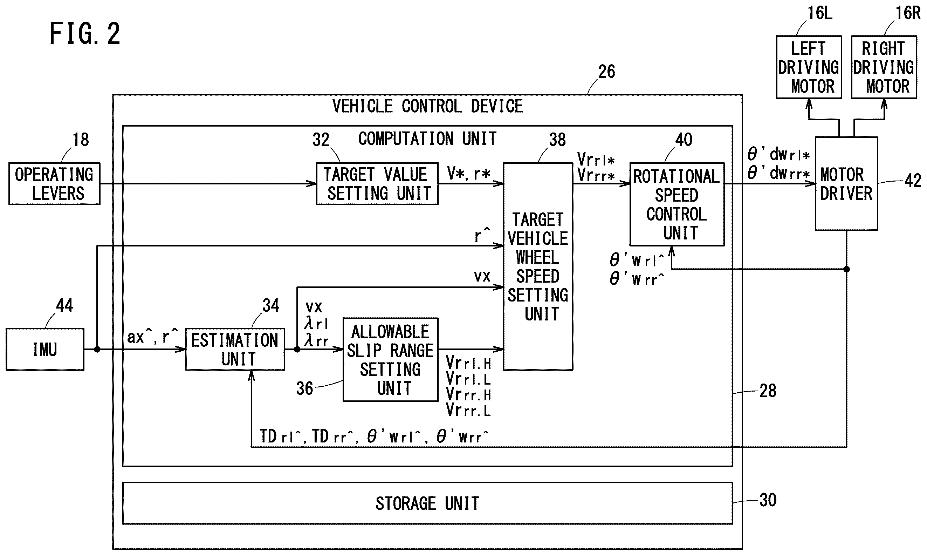

FIG. 1 is a perspective view of the vehicle 10. The vehicle 10 is an electrically powered riding lawn mower. The vehicle 10 is equipped with a left front wheel 12L, a right front wheel 12R, a left driving wheel 14L as a left rear wheel, and a right driving wheel 14R as a right rear wheel. The left front wheel 12L and the right front wheel 12R are caster wheels, and the direction thereof can be freely changed. The left driving wheel 14L is driven by a left driving motor 16L (see FIG. 2), and the right driving wheel 14R is driven by a right driving motor 16R (see FIG. 2). The vehicle 10 does not include a steering wheel, and is capable of turning by means of a difference between a vehicle wheel speed $V_{rl}$ of the left driving wheel 14L and a vehicle wheel speed $V_{rr}$ of the right driving wheel 14R.

The vehicle 10 is equipped with a pair of left and right operating levers 18, and a seat 20. A non-illustrated occupant (an operator) sits on the seat 20, and operates the operating levers 18. By the operating levers 18 being operated, the vehicle 10 moves forward, moves rearward, and turns. The vehicle 10 may also be an autonomous vehicle.

The vehicle 10 is equipped with a lawn mower deck 22. A plurality of blades 24 are provided on the lawn mower deck 22. By the blades 24 being rotated, mowing of the grass is carried out.

[Configuration of Vehicle Control Device]

FIG. 2 is a block diagram of the vehicle control device 26. The vehicle control device 26 is mounted on the vehicle 10, and controls the vehicle 10. The vehicle control device 26 includes a computation unit 28 and a storage unit 30.

The computation unit 28, for example, is a processor such as a CPU (Central Processing Unit), a GPU (Graphics Processing Unit), or the like. The computation unit 28 includes a target value setting unit 32, an estimation unit 34, an allowable slip range setting unit 36, a target vehicle wheel speed setting unit 38, and a rotational speed control unit 40. The target value setting unit 32, the estimation unit 34, the allowable slip range setting unit 36, the target vehicle wheel speed setting unit 38, and the rotational speed control unit 40 are realized by executing in the computation unit 28 a program that is stored in the storage unit 30. At least a portion of the target value setting unit 32, the estimation unit 34, the allowable slip range setting unit 36, the target vehicle wheel speed setting unit 38, and the rotational speed control unit 40 may be realized by an integrated circuit such as an ASIC (Application Specific Integrated Circuit) or an FPGA (Field-Programmable Gate Array) or the like. At least a portion of the target value setting unit 32, the estimation unit 34, the allowable slip range setting unit 36, the target vehicle wheel speed setting unit 38, and the rotational speed control unit 40 may be realized by an electronic circuit including a discrete device.

The storage unit 30 is constituted from a non-illustrated volatile memory and a non-illustrated non-volatile memory, which are computer-readable storage media. The volatile memory, for example, is a RAM (Random Access Memory) or the like. The non-volatile memory, for example, is a ROM (Read Only Memory), a flash memory, or the like. Data and the like are stored, for example, in the volatile memory. Programs, tables, maps, and the like are stored, for example, in the non-volatile memory. At least a portion of the storage unit 30 may be provided in the processor, the integrated circuit, or the like, which were described above. At least a portion of the storage unit 30 may be mounted on a device that is connected to the vehicle 10 by a network.

The target value setting unit 32 sets a target vehicle speed V* and a target yaw rate r* based on an operated amount of the operating levers 18.

The estimation unit 34 estimates a vehicle body speed vx of the vehicle 10. The vehicle body speed vx is estimated based on a driving torque $TD_{rl}{}^{\wedge}$ of the left driving wheel 14L, a driving torque $TD_{rr}{}^{\wedge}$ of the right driving wheel 14R, a rotational speed $\theta'w_{rl}{}^{\wedge}$ of the left driving wheel 14L, a rotational speed $\theta'w_{rr}{}^{\wedge}$ of the right driving wheel 14R, a frontward and rearward acceleration $ax^{\wedge}$ of the vehicle 10, and a yaw rate $r^{\wedge}$ of the vehicle 10.

The driving torque $TD_{rl}{}^{\wedge}$ of the left driving wheel 14L, the driving torque $TD_{rr}{}^{\wedge}$ of the right driving wheel 14R, the rotational speed $\theta'w_{rl}{}^{\wedge}$ of the left driving wheel 14L, and the rotational speed $\theta'w_{rr}{}^{\wedge}$ of the right driving wheel 14R are detected in a motor driver 42.

In the vehicle 10 according to the present embodiment, the left driving wheel 14L and the left driving motor 16L are directly connected, and the rotational speed of the left driving motor 16L is the same as the rotational speed of the left driving wheel 14L. In the case that a transmission is disposed between the left driving wheel 14L and the left driving motor 16L, then based on a gear ratio of the transmission, the rotational speed of the left driving motor 16L can be converted into the rotational speed of the left driving wheel 14L.

Similarly, in the vehicle 10 according to the present embodiment, a description is given in which the right driving wheel 14R and the right driving motor 16R are directly connected, and the rotational speed of the right driving motor 16R is the same as the rotational speed of the right driving wheel 14R. In the case that a transmission is disposed between the right driving wheel 14R and the right driving motor 16R, then based on a gear ratio of the transmission, the rotational speed of the right driving motor 16R can be converted into the rotational speed of the right driving wheel 14R.

The frontward and rearward acceleration $ax^{\wedge}$ and the yaw rate $r^{\wedge}$ are detected by an inertial measurement device (an inertial measurement unit, hereinafter referred to as an IMU) 44. Apart therefrom, the IMU 44 also detects a lateral acceleration $ay^{\wedge}$, an upper and lower acceleration $az^{\wedge}$, a roll rate $p^{\wedge}$, and a pitch rate $q^{\wedge}$ of the vehicle 10.

Hereinafter, a value in which the symbol "^" is included indicates a detected value, or alternatively, a value that was determined from the detected value and a specification value of the vehicle 10. Hereinafter, the detected values may be referred to as observed values or observed quantities. A description will be given in detail later concerning a method of estimating the vehicle body speed vx in the estimation unit 34.

The allowable slip range setting unit 36 sets a left slip determination upper limit value $Vr_{rl.H}$ and a left slip determination lower limit value $Vr_{rl.L}$ in order to determine the slip of the left driving wheel 14L. The allowable slip range of the left driving wheel 14L is set by the left slip determination upper limit value $Vr_{rl.H}$ and the left slip determination lower limit value $Vr_{rl.L}$.

The allowable slip range setting unit 36 sets a right slip determination upper limit value $Vr_{rr.H}$ and a right slip determination lower limit value $Vr_{rr.L}$ in order to determine the slip of the right driving wheel 14R. The allowable slip range of the right driving wheel 14R is set by the right slip determination upper limit value $Vr_{rr.H}$ and the left slip determination lower limit value $Vr_{rr.L}$. A description will be given in detail later concerning the setting of the allowable slip range.

The target vehicle wheel speed setting unit 38 determines a left and right vehicle wheel speed distribution that satisfies the target vehicle speed V* and the target yaw rate r* insofar as possible within the allowable slip range. In accordance with this feature, a target vehicle wheel speed $Vr_{rl}{}^{*}$ and a target vehicle wheel speed $Vr_{rr}{}^{*}$ are set within the allowable slip range. Therefore, slippage of the left driving wheel 14L and the right driving wheel 14R can be suppressed. A description will be given in detail later concerning the setting of the target vehicle wheel speed $Vr_{rl}{}^{*}$ and the target vehicle wheel speed $Vr_{rr}{}^{*}$.

The rotational speed control unit 40 controls the rotational speed of the left driving motor 16L. The rotational speed control unit 40 sets a rotational speed command value $\theta'dw_{rl}{}^{*}$ based on the target vehicle wheel speed $Vr_{rl}{}^{*}$ and the rotational speed $\theta'w_{rl}{}^{\wedge}$ of the left driving wheel 14L, and outputs the rotational speed command value $\theta'dw_{rl}{}^{*}$ to the motor driver 42. The motor driver 42 drives the left driving motor 16L in accordance with the rotational speed command value $\theta'dw_{rl}{}^{*}$.

The rotational speed control unit 40 controls the rotational speed of the right driving motor 16R. The rotational speed control unit 40 sets a rotational speed command value $\theta'dw_{rr}{}^*$ based on the target vehicle wheel speed $Vr_{rr}{}^*$ and the rotational speed $\theta'w_{rr}{}^{\wedge}$ of the right driving wheel 14R, and outputs the rotational speed command value $\theta'dw_{rr}{}^*$ to the motor driver 42. The motor driver 42 drives the right driving motor 16R in accordance with the rotational speed command value $\theta'dw_{rr}{}^*$.

[Concerning the Setting of the Allowable Slip Range]

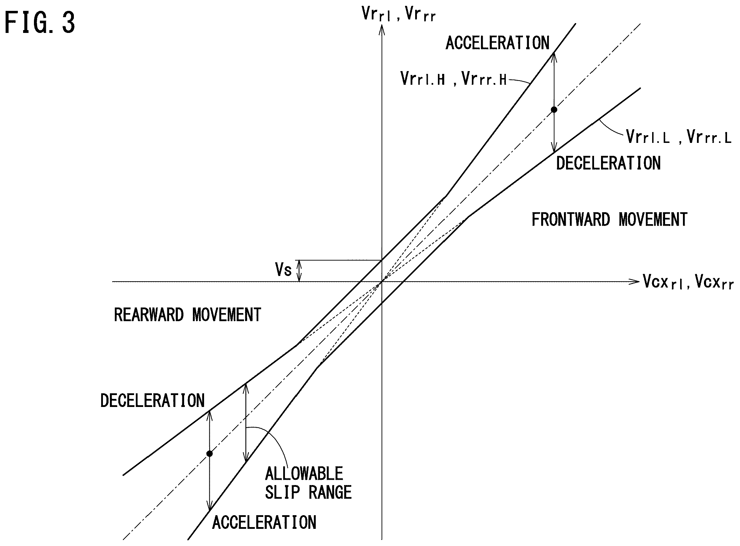

A description will be given below concerning the setting of the allowable slip range. FIG. 3 is a graph showing the allowable slip range. A left slip determination upper limit value $Vr_{rl.H}$, a left slip determination lower limit value $Vr_{rl.L}$, a right slip determination upper limit value $Vr_{rr.H}$, and a right slip determination lower limit value $Vr_{rr.L}$ are determined by the following Equation (1).

$$
\begin{bmatrix} Vr_{rl.H} \\ Vr_{rl.L} \\ Vr_{rr.H} \\ Vr_{rr.L} \end{bmatrix} = \begin{bmatrix} Vcx_{rl} + max(\kappa s_{fwd} \cdot |Vcx_{rl}|, Vs) \\ Vcx_{rl} + min(\kappa s_{rvs} \cdot |Vcx_{rl}|, -Vs) \\ Vcx_{rr} + max(\kappa s_{fwd} \cdot |Vcx_{rr}|, Vs) \\ Vcx_{rr} + min(\kappa s_{rvs} \cdot |Vcx_{rr}|, -Vs) \end{bmatrix} \quad \cdots (1)
$$

$$
Vcx_{rl} = vx - \frac{dr}{2} r^{\wedge} \quad \cdots (2)
$$

$$
Vcx_{rr} = vx + \frac{dr}{2} r^{\wedge} \quad \cdots (3)
$$

$$
\kappa s_{fwd} = min(\lambda_{rl}, \lambda_{rr}) \times \kappa s_{fwd.o} \quad \cdots (4)
$$

$$
\kappa s_{rvs} = min(\lambda_{rl}, \lambda_{rr}) \times \kappa s_{rvs.o} \quad \cdots (5)
$$

In Equation (1), the term $Vcx_{rl}$ is a ground speed of the left driving wheel 14L, and the term $Vcx_{rr}$ is a ground speed of the right driving wheel 14R. The ground speed $Vcx_{rl}$ can also be referred to as an axial speed of the left driving wheel 14L. Similarly, the ground speed $Vcx_{rr}$ can also be referred to as an axial speed of the right driving wheel 14R. As shown in Equation (2), the ground speed $Vcx_{rl}$ is calculated from the vehicle body speed vx and the yaw rate $r^{\wedge}$. As shown in Equation (3), the ground speed $Vcx_{rr}$ is calculated from the vehicle body speed vx and the yaw rate $r^{\wedge}$. The term dr in Equation (2) and Equation (3) represents a tread width between the left driving wheel 14L and the right driving wheel 14R.

The term $\kappa s_{fwd}$ in Equation (1) represents a determination slip ratio in the forward traveling direction, and is a value that is greater than or equal to 0 (zero). The term $\kappa s_{rvs}$ represents a determination slip ratio in the rearward traveling direction, and is a value that is less than 0 (zero). The determined slip ratio $\kappa s_{fwd}$ is determination from Equation (4). The determined slip ratio $\kappa s_{rvs}$ is determination from Equation (5).

The term Vs in Equation (1) represents a minimum slip speed and is a value that is greater than 0 (zero). The minimum slip speed Vs is used in order to define a slip determination value at an extremely low speed.

The term $\lambda_{rl}$ in Equation (4) and Equation (5) is a road surface coefficient (a left road surface coefficient), which is a correction coefficient with respect to a reference friction coefficient of the left driving wheel 14L. The term $\lambda_{rr}$ in Equation (4) and Equation (5) is a road surface coefficient (a right road surface coefficient), which is a correction coefficient with respect to a reference friction coefficient of the right driving wheel 14R.

The term $\kappa s_{fwd.o}$ in Equation (4) is a determination slip ratio in the frontward direction when the road surface coefficient $\lambda_{rl}$ and the road surface coefficient $\lambda_{rr}$ are 1, and is a value that is greater than or equal to 0 (zero). The term $\kappa s_{rvs.o}$ in Equation (5) is a determination slip ratio in the rearward direction when the road surface coefficient $\lambda_{rl}$ and the road surface coefficient $\lambda_{rr}$ are 1, and is a value that is less than 0 (zero).

[Concerning the Setting of the Target Vehicle Wheel Speeds]

A description will be given below concerning the setting of the target vehicle wheel speed $Vr_{rl}{}^*$ of the left driving wheel 14L and the target vehicle wheel speed $Vr_{rr}{}^*$ of the right driving wheel 14R. The target vehicle wheel speed setting unit 38 sets a target operating point based on an operating point defined from the current vehicle body speed vx and the yaw rate r^, and an operating point defined from the target vehicle speed V* and the target yaw rate r*. The target vehicle wheel speed setting unit 38 sets the target vehicle wheel speed $Vr_{rl}$* and the target vehicle wheel speed $Vr_{rr}$* on the basis of the target operating point.

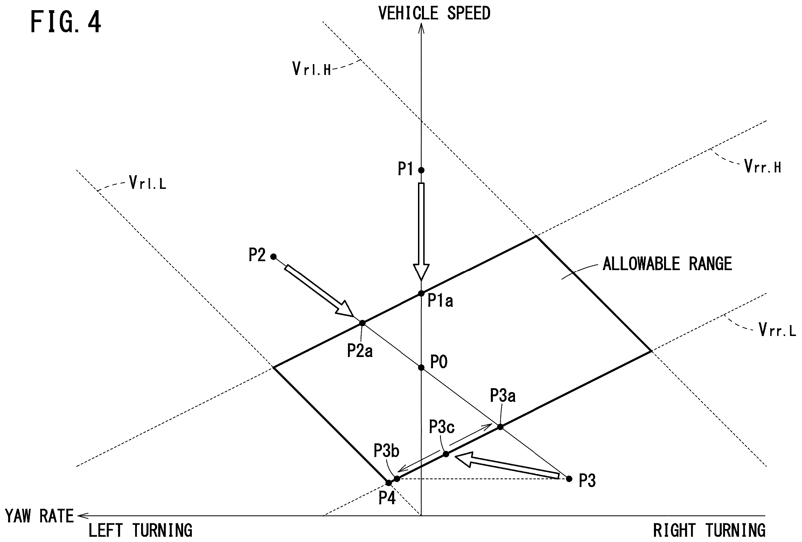

FIG. 4 is a diagram for describing a method of setting the target operating point. The term $V_{rl.H}$ in FIG. 4 is a value obtained by having converted the left slip determination upper limit value $Vr_{rl.H}$ into the vehicle speed, and hereinafter will be referred to as a left vehicle wheel speed upper limit value $V_{rl.H}$. The term $V_{rl.L}$ in FIG. 4 is a value obtained by having converted the left slip determination lower limit value $Vr_{rl.L}$ into the vehicle speed, and hereinafter will be referred to as a left vehicle wheel speed lower limit value $V_{rl.L}$. The term $V_{rr.H}$ in FIG. 4 is a value obtained by having converted the right slip determination upper limit value $Vr_{rr.H}$ into the vehicle speed, and hereinafter will be referred to as a right vehicle wheel speed upper limit value $V_{rr.H}$. The term $V_{rr.L}$ in FIG. 4 is a value obtained by having converted the right slip determination lower limit value $Vr_{rr.L}$ into the vehicle speed, and hereinafter will be referred to as a right vehicle wheel speed lower limit value $V_{rr.L}$.

The left vehicle wheel speed upper limit value $V_{rl.H}$, the left vehicle wheel speed lower limit value $V_{rl.L}$, the right vehicle wheel speed upper limit value $V_{rr.H}$, and the right vehicle wheel speed lower limit value $V_{rr.L}$ are calculated by the following Equation (6).

$$\begin{bmatrix} V_{rl.H} \\ V_{rl.L} \\ V_{rr.H} \\ V_{rr.L} \end{bmatrix} = \begin{bmatrix} Vr_{rl.H} + \dfrac{dr}{2}r^{\wedge} \\ Vr_{rl.L} + \dfrac{dr}{2}r^{\wedge} \\ Vr_{rr.H} - \dfrac{dr}{2}r^{\wedge} \\ Vr_{rr.l} - \dfrac{dr}{2}r^{\wedge} \end{bmatrix} \quad \cdots (6)$$

The target vehicle wheel speed setting unit 38 sets the target operating point within an allowable range surrounded by the left vehicle wheel speed upper limit value $V_{rl.H}$, the left vehicle wheel speed lower limit value $V_{rl.L}$, the right vehicle wheel speed upper limit value $V_{rr.H}$, and the right vehicle wheel speed lower limit value $V_{rr.L}$. By setting the target vehicle wheel speed $Vr_{rl}$* of the left driving wheel 14L based on the target operating point that is set within the allowable range, the target vehicle wheel speed $Vr_{rl}$* is set within the allowable slip range of the left driving wheel 14L. By setting the target vehicle wheel speed $Vr_{rr}$* of the right driving wheel 14R based on the target operating point that is set within the allowable range, the target vehicle wheel speed $Vr_{rr}$* is set within the allowable slip range of the right driving wheel 14R.

The operating point defined from the current vehicle body speed vx and the yaw rate r^ is taken to be a point P0. As methods for setting the target operating point, hereinafter, three examples thereof are indicated.

The first example is an exemplary case in which the vehicle is accelerating while traveling straight. The operating point, which is defined by the target vehicle speed V* and the target yaw rate r*, is taken to be a point P1. In this case, the target vehicle wheel speed setting unit 38 sets a point P1a as the target operating point. The target operating point P1a is the point that is closest to the point P1 within the allowable range from among the points located on a line connecting the points P0 and P1.

The second example is an exemplary case in which the vehicle is accelerating while making a turn. The operating point, which is defined from the target vehicle speed V* and the target yaw rate r*, is taken to be a point P2. In this case, the target vehicle wheel speed setting unit 38 sets a point P2a as the target operating point. The target operating point P2a is the point that is closest to the point P2 within the allowable range from among the points located on a line connecting the points P0 and P2.

The third example is an exemplary case in which the vehicle is decelerating while making a turn. The operating point, which is defined from the target vehicle speed V* and the target yaw rate r*, is taken to be a point P3. In this case, the target vehicle wheel speed setting unit 38 sets a point P3c as the target operating point. The target operating point P3c is any one of the points on a line connecting a point P3a and a point P3b. The point P3a is the point that is closest to the point P2 within the allowable range from among the points located on a line connecting the points P0 and P3. The point P3b is the point that is closest to the point P3 from among the points within the allowable range that coincide with the target vehicle speed V*.

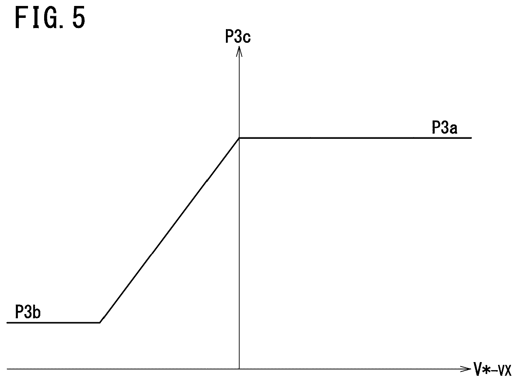

FIG. 5 is an image diagram of the method of setting the target operating point P3c. As shown in FIG. 5, when the vehicle speed deviation (= V* - vx) is negative, the target operating point P3c is set to a point that becomes closer to the point P3b as the magnitude of the vehicle speed deviation increases. Further, when the vehicle speed deviation is negative, the target operating point P3c is set to a point that becomes closer to the point P3a as the magnitude of the vehicle speed deviation decreases.

In the case that the target vehicle speed V* is smaller than the allowable range, then irrespective of the target yaw rate r*, a point P4 is set as the target operating point.

In the case that the vehicle 10 is caused to decelerate, a target operating point is set that prioritizes the target vehicle speed V* over the target yaw rate r*. Therefore, the target operating point is set to a point within the allowable range that is as close as possible to the target vehicle speed V*. Consequently, although there is a possibility that the vehicle 10 may turn in a direction that is opposite to the target yaw rate r*, the vehicle 10 can be reliably made to decelerate. In addition, since the vehicle 10 decelerates, the vehicle 10 can be easily made to turn.

Moreover, in the case that the operating point defined from the target vehicle speed V* and the target yaw rate r* lies within the allowable range, the operating point is set as the target operating point. In this case, the target vehicle wheel speed $Vr_{rl}$* of the left driving wheel 14L is calculated by the following Equation (7). The target vehicle wheel speed $Vr_{rr}$* of the right driving wheel 14R is calculated by the following Equation (8).

$$Vr_{rl} *= V * - \frac{dr}{2} r * \quad \cdots (7)$$

$$Vr_{rr} *= V * + \frac{dr}{2} r * \quad \cdots (8)$$

In the case that the operating point defined from the target vehicle speed V* and the target yaw rate r* lies outside of the allowable range, the target vehicle wheel speed $Vr_{rl}$* and the target vehicle wheel speed $Vr_{rr}$* are calculated from the vehicle speed and the yaw rate corresponding to the set target operating point, in a manner similar to that shown in Equation (7) and Equation (8).

[Concerning the Estimation of the Vehicle Body Speed]

The estimation unit 34 processes a first state equation and an observation equation in accordance with a first extended Kalman filter, and thereby estimates the vehicle body speed vx, the road surface coefficient $\lambda_{rl}$ of the left driving wheel 14L, and the road surface coefficient $\lambda_{rr}$ of the right driving wheel 14R. The first state equation includes, as state quantities, an estimated value vx of the vehicle body speed, an estimated value $\lambda_{rl}$ of the road surface coefficient of the left driving wheel 14L, and an estimated value $\lambda_{rr}$ of the road surface coefficient of the right driving wheel 14R. The observation equation includes, as observed quantities, an observed value $\theta'w_{rl}{}^\wedge$ of the rotational speed of the left driving wheel 14L, an observed value $\theta'w_{rr}{}^\wedge$ of the rotational speed of the right driving wheel 14R, an observed value $ax^\wedge$ of the frontward and rearward acceleration of the vehicle 10, and an observed value $r^\wedge$ of the yaw rate of the vehicle 10.

The first state equation and the observation equation are set based on a dynamic model of the vehicle 10, a dynamic model of the left driving wheel 14L, and a dynamic model of the right driving wheel 14R. The following Equation (9) is the first state equation, and the following Equation (10) is the observation equation.

$$\frac{d}{dt}\begin{bmatrix} \theta' w_{rl} \\ \theta' w_{rr} \\ vx \\ r \\ \lambda_{rl} \\ \lambda_{rr} \end{bmatrix} = \begin{bmatrix} -\dfrac{Re \cdot Fx_{rl}}{Iw} \\ -\dfrac{Re \cdot Fx_{rr}}{Iw} \\ \dfrac{1}{M}(Fx_{rl} + Fx_{rr}) \\ \dfrac{d_r}{2 \cdot Iz}(Fx_{rl} - Fx_{rr}) \\ k\mu(1 - \lambda_{rl}) \\ k\mu(1 - \lambda_{rr}) \end{bmatrix} + \begin{bmatrix} \dfrac{TD_{rl}}{Iw} \\ \dfrac{TD_{rr}}{Iw} \\ g \sin \phi P - \mu r \cdot g \cos \phi P \\ 0 \\ 0 \\ 0 \end{bmatrix} \quad \cdots (9)$$

$$\begin{bmatrix} Vr_{rl}{}^{\wedge} \\ Vr_{rr}{}^{\wedge} \\ a_x{}^{\wedge} \\ r^{\wedge} \\ vx^{\wedge} \\ \lambda_{rl}{}^{\wedge} \\ \lambda_{rr}{}^{\wedge} \end{bmatrix} = \begin{bmatrix} Re \cdot \theta' \, w_{rl} \\ Re \cdot \theta' \, w_{rr} \\ \dfrac{1}{M}(Fx_{rl} + Fx_{rr} - \mu r \cdot M \cdot g \cos \phi P) \\ r \\ vx \\ \lambda_{rl} \\ \lambda_{rr} \end{bmatrix} \quad \cdots (10)$$

$$Fx_{rl} = \frac{Fz_{rl}}{Fz0_{rl}} \lambda_{rl} \cdot Px2 \cdot \tanh\left(\frac{\kappa T0 \cdot \Phi 0}{2Re \cdot \lambda_{rl} \cdot Px2}\right) \kappa_{rl} \quad \cdots (11)$$

$$Fx_{rr} = \frac{Fz_{rr}}{Fz0_{rr}} \lambda_{rr} \cdot Px2 \cdot \tanh\left(\frac{\kappa T0 \cdot \Phi 0}{2Re \cdot \lambda_{rr} \cdot Px2}\right) \kappa_{rr} \quad \cdots (12)$$

$$Fz_{rl} = Fz0_{rl} \cdot \cos \phi R \cdot \cos \phi P - \frac{h}{2dr} M \cdot ay^{\wedge} + \frac{h}{2l} M \cdot ax^{\wedge} \quad \cdots (13)$$

$$Fz_{rr} = Fz0_{rr} \cdot \cos \phi R \cdot \cos \phi P + \frac{h}{2dr} M \cdot ay^{\wedge} + \frac{h}{2l} M \cdot ax^{\wedge} \quad \cdots (14)$$

$$\kappa_{rl} = \frac{Vr_{rl}{}^{\wedge} - Vcx_{rl}}{|Vcx_{rl}|} \quad \cdots (15)$$

$$\kappa_{rr} = \frac{Vr_{rr}{}^{\wedge} - Vcx_{rr}}{|Vcx_{rr}|} \quad \cdots (16)$$

$$Vr_{rl}{}^{\wedge} = Re \cdot \theta' \, w_{rl}{}^{\wedge} \quad \cdots (17)$$

$$Vr_{rr}{}^{\wedge} = Re \cdot \theta' \, w_{rr}{}^{\wedge} \quad \cdots (18)$$

$$Vcx_{rl} = vx - \frac{dr}{2} r^{\wedge} \quad \cdots (2)$$

$$Vcx_{rr} = vx + \frac{dr}{2} r^{\wedge} \quad \cdots (3)$$

As state quantities, the rotational speed $\theta' w_{rl}$ of the left driving wheel 14L, the rotational speed $\theta' w_{rr}$ of the right driving wheel 14R, the vehicle body speed vx, the yaw rate r, the road surface coefficient $\lambda_{rl}$ between the left driving wheel 14L and a contact ground road surface, and the road surface coefficient $\lambda_{rr}$ between the right driving wheel 14R and a contact ground road surface are used in the first state equation and the observation equation. Further, as control inputs, there are used the driving torque $TD_{rl}$ of the left driving wheel 14L, the driving torque $TD_{rr}$ of the right driving wheel 14R, and a pitch angle $\phi P$ of the vehicle 10. Further, as the observed quantities, there are used a vehicle wheel speed $Vr_{rl}{}^{\wedge}$ of the left driving wheel 14L, a vehicle wheel speed $V_{rr}{}^{\wedge}$ of the right driving wheel 14R, the frontward and rearward acceleration $ax^{\wedge}$ of the vehicle 10, the yaw rate $r^{\wedge}$ of the vehicle 10, the vehicle body speed $vx^{\wedge}$, the road surface coefficient $\lambda_{rl}{}^{\wedge}$ between the left

driving wheel 14L and the contact ground road surface, and the road surface coefficient $\lambda_{rr}{}^{\wedge}$ between the right driving wheel 14R and the contact ground road surface.

Among the observed quantities, the vehicle body speed $vx^{\wedge}$, the road surface coefficient $\lambda_{rl}{}^{\wedge}$, and the road surface coefficient $\lambda_{rr}{}^{\wedge}$ are pseudo-observed values. For example, in the case that the estimated values are forced to be arbitrary values, then such arbitrary values are input to the pseudo-observed values. In accordance with this feature, the estimated values are prevented from diverging.

The term $Fx_{rl}$ in Equation (9) and Equation (10) is a driving force in the frontward and rearward direction of the left driving wheel 14L, and the term $Fx_{rr}$ is a driving force in a frontward and rearward direction of the right driving wheel 14R. The driving force $Fx_{rl}$ is determined using Equation (11), and the driving force $Fx_{rr}$ is determined using Equation (12).

The term $Fz_{rl}$ in Equation (11) is a wheel load of the left driving wheel 14L, and the term $Fz_{rr}$ in Equation (12) is a wheel load of the right driving wheel 14R. The wheel load $Fz_{rl}$ is determined using Equation (13), and the wheel load $Fz_{rr}$ is determined using Equation (14).

The term $\kappa_{rl}$ in Equation (11) is a slip ratio of the left driving wheel 14L, and the term $\kappa_{rr}$ in Equation (12) is a slip ratio of the right driving wheel 14R. The slip ratio $\kappa_{rl}$ is determined using Equation (15), and the slip ratio $\kappa_{rr}$ is determined using Equation (16).

The term $Vr_{rl}{}^{\wedge}$ in Equation (15) is a vehicle wheel speed of the left driving wheel 14L, and the term $Vr_{rr}{}^{\wedge}$ in Equation (16) is a vehicle wheel speed of the right driving wheel 14R. As shown in Equation (17), the vehicle wheel speed $Vr_{rl}{}^{\wedge}$ is determined from a radius Re of the left driving wheel 14L and the rotational speed $\theta'w_{rl}{}^{\wedge}$ of the left driving wheel 14L. As shown in Equation (18), the vehicle wheel speed $Vr_{rr}{}^{\wedge}$ is determined from a radius Re of the right driving wheel 14R, and the rotational speed $\theta'w_{rr}{}^{\wedge}$ of the right driving wheel 14R.

The term Iw in Equation (9) is a moment of inertia of the left driving wheel 14L and the right driving wheel 14R, and is a specification value. The term Iz in Equation (9) is a yaw moment of inertia, and is a specification value.

The term M in Equation (9), Equation (10), Equation (13), and Equation (14) is a weight of the vehicle 10, and is a specification value. The term h in Equation (13) and Equation (14) is a height of the center of gravity of the vehicle 10, and is a specification value. The term $Fz0_{rl}$ in Equation (11) and Equation (13) is a set wheel load of the left driving wheel 14L, and is a specification value. The term $Fz0_{rr}$ in Equation (12) and Equation (14) is a set wheel load of the right driving wheel 14R, and is a specification value.

The term Px2 in Equation (11) and Equation (12) is a reference maximum driving force of the left driving wheel 14L and the right driving wheel 14R, and is a specification value. The term $\kappa T0$ in Equation (11) and Equation (12) is a reference tire stiffness of the left driving wheel 14L and the right driving wheel 14R, and is a specification value. The term $\phi 0$ in Equation (11) and Equation (12) is a reference ground contact length of the left driving wheel 14L and the right driving wheel 14R.

The term $ay^{\wedge}$ in Equation (13) and Equation (14) is a lateral acceleration of the vehicle 10, and is detected in the IMU 44. The term $k\mu$ in Equation (9) is a friction recovery coefficient, and is set to an arbitrary value. The term g in Equation (9) and Equation (10) is a gravitational acceleration. The term $\phi P$ in Equation (9), Equation (10), Equation (13), and Equation (14) is an estimated value of the pitch angle of the vehicle 10. The term $\phi R$ in Equation (13) and Equation (14) is an estimated value of a roll angle of the vehicle 10.

The estimation unit 34 processes a second state equation and an observation relational expression in accordance with a second extended Kalman filter, and thereby estimates the pitch angle $\phi P$ and the roll angle $\phi R$ of the vehicle 10. The second state equation includes, as state quantities, an estimated value $\phi P$ of the pitch angle, and an estimated value $\phi R$ of the roll angle. The observation relational expression shows a relationship between the observed value of the pitch angle $\phi P^{\wedge}$ and the observed value of the roll angle $\phi R^{\wedge}$, and the observed value of the frontward and rearward acceleration $ax^{\wedge}$, the observed value of the lateral acceleration $ay^{\wedge}$, and the observed value of the upper and lower acceleration $az^{\wedge}$.

The second state equation and the observation relational expression are set based on the dynamic model of the vehicle 10. The following Equation (19) is the second state equation, and the following Equation (20) is the observation relational expression.

$$\frac{d}{dx}\begin{bmatrix} \phi R \\ \phi P \\ pb \\ qb \\ rb \end{bmatrix}$$

$$= \begin{bmatrix} (p^\wedge - pb) + (q^\wedge - qb) \cdot \sin \phi R \cdot \tan \phi P + (r^\wedge - rb) \cdot \cos \phi R \cdot \tan \phi P \\ (q^\wedge - qb) \cos \phi R - (r^\wedge - rb) \sin \phi R \\ 0 \\ 0 \\ 0 \end{bmatrix} \quad \cdots (19)$$

$$\begin{bmatrix} \phi R^\wedge \\ \phi P^\wedge \end{bmatrix} = \begin{bmatrix} \tan^{-1}\left(\dfrac{ay^\wedge}{az^\wedge}\right) \\ -\tan^{-1}\left(\dfrac{ax^\wedge}{\sqrt{ay^{\wedge 2} + az^{\wedge 2}}}\right) \end{bmatrix} \quad \cdots (20)$$

In the second state equation, there are used, as state quantities, the pitch angle $\phi P$ of the vehicle 10 and the roll angle $\phi R$ of the vehicle 10. Further, there are used, as control inputs, a roll rate p, a pitch rate q, and a yaw rate r. In the observation relational expression, there are used, as observed quantities, a pitch angle $\phi P^\wedge$ of the vehicle 10, a roll angle $\phi R^\wedge$ of the vehicle 10, the frontward and rearward acceleration $ax^\wedge$ of the vehicle 10, the lateral acceleration $ay^\wedge$ of the vehicle 10, and the upper and lower acceleration $az^\wedge$ of the vehicle 10.

The term pb in Equation (19) is a deviation amount of a midpoint of the roll rate $p^\wedge$ detected by the IMU 44, and is an estimated value. The term qb in Equation (19) is a deviation amount of a midpoint of the pitch rate $q^\wedge$ that is detected by the IMU 44. The term rb in Equation (19) is a deviation amount of a midpoint of the yaw rate $r^\wedge$ that is detected by the IMU 44.

The pitch angle $\phi P$ and the roll angle $\phi R$, which make up the angle of inclination of the vehicle 10, can be determined by integrating the angular velocity. However, since a deviation of the midpoint is included in the angular velocity detected by the IMU 44, the angle of inclination that is determined from the angular velocity also includes an integrated deviation of the midpoint.

Further, since the direction of the gravitational acceleration g with respect to the vehicle 10 changes due to the vehicle 10 being inclined, the angle of inclination can also be determined from the acceleration of the vehicle 10. However, since the dynamic acceleration of the vehicle 10 is included in the acceleration detected by the IMU 44, particularly at a time when the vehicle 10 is accelerating or decelerating, or at a time when turning, a large amount of error is included in the angle of inclination determined from the acceleration.

According to the present embodiment, the second state equation is set using the angular velocity, and the observation relational expression is set using the acceleration. By processing the second state equation and the observation relational expression in accordance with the second extended Kalman filter, the deviation of the midpoint of the angular velocity and the dynamic acceleration can be corrected in a complementary manner. More specifically, the second extended Kalman filter can be made to function as a complementary filter.

According to the present embodiment, the estimation is carried out using the extended Kalman filters, however, the estimation may be carried out using other parameter estimation methods. As such other parameter estimation methods, there may also be used at least squares estimation, a Markov estimation, a maximum likelihood estimation, a Bayesian estimation, or the like. Further, although the extended Kalman filters are a type of Bayesian estimation, other Kalman filters, for example, a sigma point Kalman filter or the like, may also be used.

[Driving Motor Control]

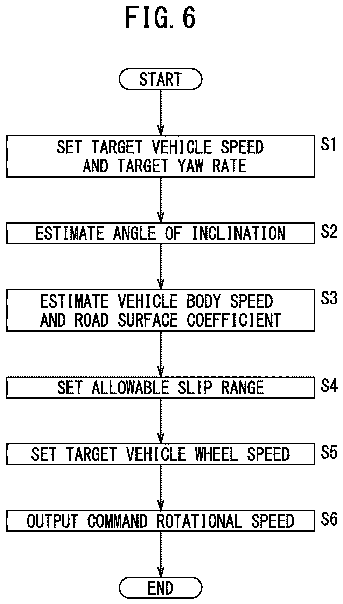

FIG. 6 is a flowchart of the driving motor control performed in the vehicle control device 26. The driving motor control is repeatedly executed at a predetermined cycle.

In step S1, the target value setting unit 32 sets the target vehicle speed V* and the target yaw rate r* based on an operated amount of the operating levers 18. Thereafter, the process transitions to step S2.

In step S2, the estimation unit 34 estimates the angle of inclination of the vehicle 10 based on the roll rate $p^\wedge$, the pitch rate $q^\wedge$, the yaw rate $r^\wedge$, the frontward and rearward acceleration $ax^\wedge$, the lateral acceleration $ay^\wedge$, and the upper and lower acceleration $az^\wedge$. Thereafter, the process transitions to step S3.

In step S3, the estimation unit 34 estimates the vehicle body speed vx, the road surface coefficient $\lambda_{rl}$, and the road surface coefficient $\lambda_{rr}$ based on the rotational speed $\theta'w_{rl}{}^\wedge$ and the driving torque $TD_{rl}{}^\wedge$ of the left driving wheel 14L, the rotational speed $\theta'w_{rr}{}^\wedge$ and the driving torque $TD_{rr}{}^\wedge$ of the right driving wheel 14R, the frontward and rearward acceleration $ax^\wedge$, and the yaw rate $r^\wedge$. Thereafter, the process transitions to step S4.

In step S4, the allowable slip range setting unit 36 calculates the left slip determination upper limit value $Vr_{rl.H}$ and the left slip determination lower limit value $Vr_{rl.L}$, and sets the allowable slip range of the left driving wheel 14L. Further, the allowable slip range setting unit 36 calculates the right slip determination upper limit value $Vr_{rr.H}$ and the right slip determination lower limit value $Vr_{rr.L}$, and sets the allowable slip range of the right driving wheel 14R. Thereafter, the process transitions to step S5.

In step S5, the target vehicle wheel speed setting unit 38 sets within the allowable slip range of the left driving wheel 14L the target vehicle wheel speed $Vr_{rl}^*$ of the left driving wheel 14L, based on the target vehicle speed $V^*$ and the target yaw rate $r^*$. Further, the target vehicle wheel speed setting unit 38 sets within the allowable slip range of the right driving wheel 14R the target vehicle wheel speed $Vr_{rr}^*$ of the right driving wheel 14R, based on the target vehicle speed $V^*$ and the target yaw rate $r^*$. Thereafter, the process transitions to step S6.

In step S6, the rotational speed control unit 40 sets the rotational speed command value $\theta'dw_{rl}^*$ of the left driving motor 16L and the rotational speed command value $\theta'dw_{rr}^*$ of the right driving motor 16R, based on the target vehicle wheel speed $Vr_{rl}^*$ of the left driving wheel 14L, the target vehicle wheel speed $Vr_{rr}^*$ of the right driving wheel 14R, the rotational speed $\theta'w_{rl}{}^\wedge$ of the left driving motor 16L, and the rotational speed $\theta'w_{rr}{}^\wedge$ of the right driving motor 16R. The rotational speed control unit 40 outputs the rotational speed command value $\theta'dw_{rl}^*$ and the rotational speed command value $\theta'dw_{rr}^*$ to the motor driver 42. Thereafter, the driving motor control comes to an end.

[Second Embodiment]

As shown in the aforementioned FIG. 4, in the vehicle control device 26 of the first embodiment, in the case that the operating point (for example, the operating point P1) defined by the target vehicle speed $V^*$ and the target yaw rate $r^*$ lies outside of the allowable range, the target operating point is set to an operating point (for example, the operating point P1a) that lies within the allowable range. Consequently, the target vehicle wheel speed $Vr_{rl}^*$ of the left driving wheel 14L and the target vehicle wheel speed $Vr_{rr}^*$ of the right driving wheel 14R are set within the allowable slip range. More specifically, in the vehicle control device 26 according to the first embodiment, in the case that the target vehicle speed $V^*$ and the target yaw rate $r^*$ are values that cause the left driving wheel 14L and the right driving wheel 14R to slip, a slip suppression control intervenes, and thereby sets the target vehicle wheel speed $Vr_{rl}^*$ and the target vehicle wheel speed $Vr_{rr}^*$ so as to not cause the left driving wheel 14L and the right driving wheel 14R to slip. Therefore, in the vehicle control device 26 according to the first embodiment, in the case that both the left driving wheel 14L and the right driving wheel 14R are gripping, the slip suppression control intervenes. As a result, irrespective of the fact that both the left driving wheel 14L and the right driving wheel 14R are gripping, the behavior of the vehicle 10 may not be realized in accordance with the operations of the operating levers 18, and a feeling of discomfort may be imparted to the occupant.

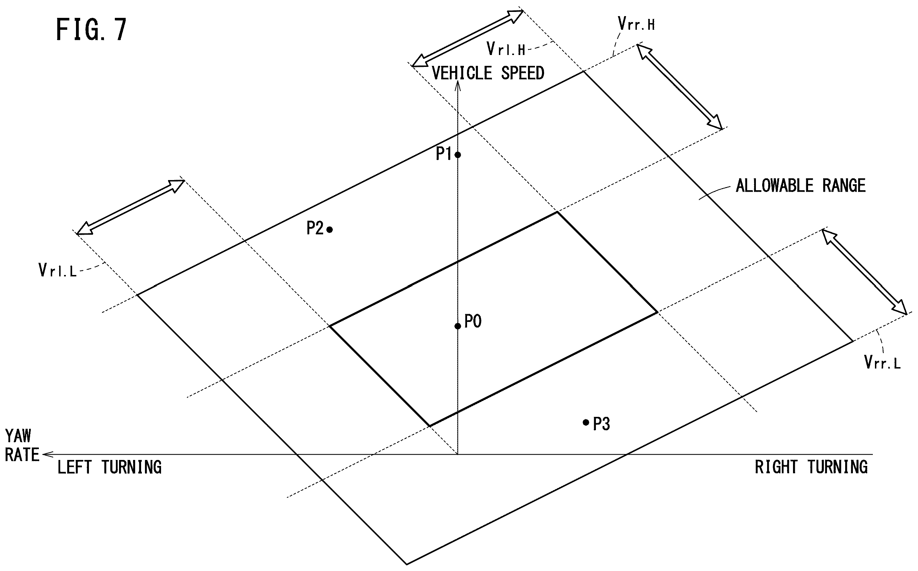

In the vehicle control device 26 according to the present embodiment, in the case that both the left driving wheel 14L and the right driving wheel 14R are gripping, the allowable range is changed. In accordance with this feature, it is possible to prevent the slip suppression control from being made to intervene in the case that both the left driving wheel 14L and the right driving wheel 14R are gripping. FIG. 7 is an image diagram of the allowable range according to the present embodiment. In the case that both the left driving wheel 14L and the right driving wheel 14R are gripping, the vehicle control device 26 expands the allowable range, causes the operating points (point P1 to point P3) defined by the target vehicle speed $V^*$ and the target yaw rate $r^*$ to be positioned within the allowable range, and does not cause the slip suppression control to intervene. On the other hand, in the case that at least one of the left driving wheel 14L or the right driving wheel 14R has slipped, the vehicle control device 26 causes the allowable range to contract, and makes it easier for the slip suppression control to intervene.

[Configuration of Vehicle Control Device]

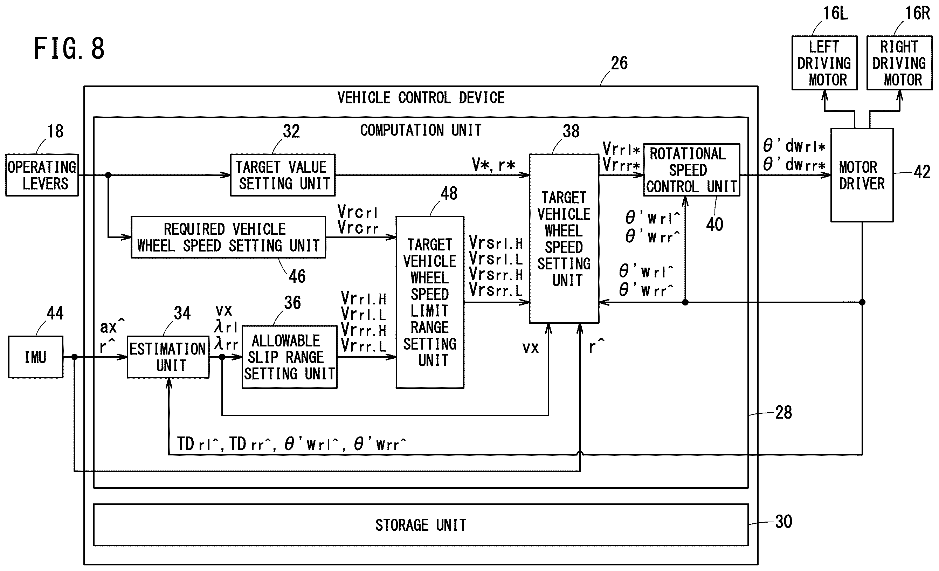

FIG. 8 is a block diagram of the vehicle control device 26. The vehicle control device 26 according to the present embodiment, in addition to the configuration of the vehicle control device 26 of the first embodiment, includes a required vehicle wheel speed setting unit 46, and a target vehicle wheel speed limit range setting unit 48.

The required vehicle wheel speed setting unit 46 sets a required vehicle wheel speed $Vrc_{rl}$ of the left driving wheel 14L and a required vehicle wheel speed $Vrc_{rr}$ of the right driving wheel 14R on the basis of an operated amount of the operating levers 18. The target vehicle wheel speed $Vr_{rl}^*$ of the left driving wheel 14L changes in accordance with the required vehicle wheel speed $Vrc_{rl}$, and the target vehicle wheel speed $Vr_{rr}^*$ of the driving wheel changes in accordance with the required vehicle wheel speed $Vrc_{rr}$.

The target vehicle wheel speed limit range setting unit 48 sets a left target vehicle wheel speed upper limit value

$Vrs_{rl.H}$ and a left target vehicle wheel speed lower limit value $Vrs_{rl.L}$ that limit the target vehicle wheel speed $Vr_{rl}*$ of the left driving wheel 14L. The target vehicle wheel speed limit range of the left driving wheel 14L is set by the left target vehicle wheel speed upper limit value $Vrs_{rl.H}$ and the left target vehicle wheel speed lower limit value $Vrs_{rl.L}$.

The target vehicle wheel speed limit range setting unit 48 sets a right target vehicle wheel speed upper limit value $Vrs_{rr.H}$ and a right target vehicle wheel speed lower limit value $Vrs_{rr.L}$ that limit the target vehicle wheel speed $Vr_{rr}*$ of the right driving wheel 14R. The target vehicle wheel speed limit range of the right driving wheel 14R is set by the right target vehicle wheel speed upper limit value $Vrs_{rr.H}$ and the right target vehicle wheel speed lower limit value $Vrs_{rr.L}$. The method of setting the target vehicle wheel speed limit range will be described in detail later.

According to the first embodiment, the target vehicle wheel speed setting unit 38 sets the target vehicle wheel speed $Vr_{rl}*$ of the left driving wheel 14L and the target vehicle wheel speed $Vr_{rr}*$ of the right driving wheel 14R such that the target vehicle wheel speed $Vr_{rl}*$ and the target vehicle wheel speed $Vr_{rr}*$ lie within the allowable slip range. In contrast thereto, according to the present embodiment, the target vehicle wheel speed setting unit 38 sets the target vehicle wheel speed $Vr_{rl}*$ of the left driving wheel 14L and the target vehicle wheel speed $Vr_{rr}*$ of the right driving wheel 14R such that the target vehicle wheel speed $Vr_{rl}*$ and the target vehicle wheel speed $Vr_{rr}*$ lie within the target vehicle wheel speed limit range.

The target vehicle wheel speed setting unit 38 of the present embodiment sets the target vehicle wheel speed $Vr_{rl}*$ and the target vehicle wheel speed $Vr_{rr}*$ in a manner similar to that of the target vehicle wheel speed setting unit 38 of the first embodiment, except that the target vehicle wheel speed limit range is used instead of the allowable slip range.

Apart therefrom, the configuration of the vehicle control device 26 is the same as the configuration of the vehicle control device 26 according to the first embodiment.

[Setting of the Target Vehicle Wheel Speed Limit Range]

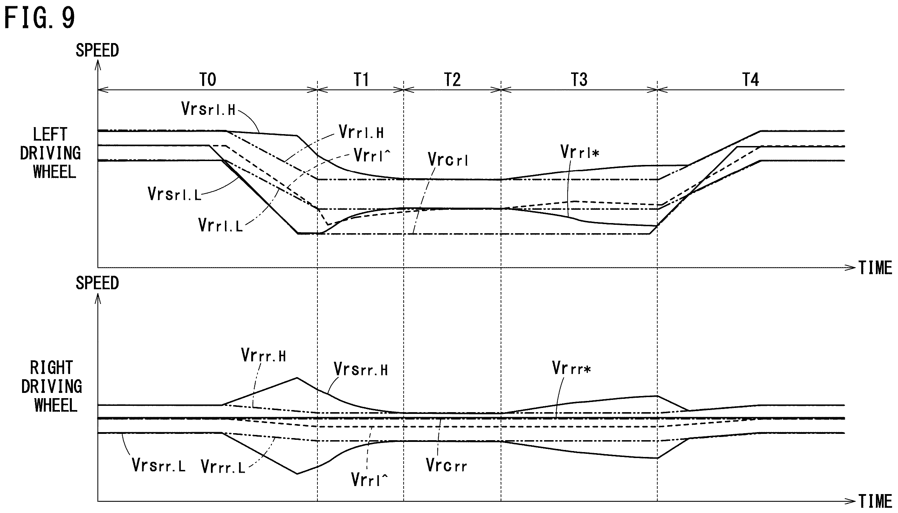

FIG. 9 is a diagram for describing the target vehicle wheel speed limit range. A range between the left target vehicle wheel speed upper limit value $Vrs_{rl.H}$ and the left target vehicle wheel speed lower limit value $Vrs_{rl.L}$ in FIG. 9 corresponds to the target vehicle wheel speed limit range of the left driving wheel 14L. A range between the right target vehicle wheel speed upper limit value $Vrs_{rr.H}$ and the right target vehicle wheel speed lower limit value $Vrs_{rr.L}$ in FIG. 9 corresponds to the target vehicle wheel speed limit range of the right driving wheel 14R.

Further, the range between the left slip determination upper limit value $Vr_{rl.H}$ and the left slip determination lower limit value $Vr_{rl.L}$ shown in FIG. 9 corresponds to the allowable slip range of the left driving wheel 14L. The range between the right slip determination upper limit value $Vr_{rr.H}$ and the right slip determination lower limit value $Vr_{rr.L}$ shown in FIG. 9 corresponds to the allowable slip range of the right driving wheel 14R.

Hereinafter, a description will be given by dividing FIG. 9 into five periods of T0 to T4. The period T0 is a state in which both the left driving wheel 14L and the right driving wheel 14R are gripping, and is a period in which the slip suppression control does not intervene. The period T1 is a state in which the left driving wheel 14L is slipping, and is a period in which the slip suppression control intervenes. The period T2 is a period in which, since the state in which the left driving wheel 14L is slipping continues, the intervention of the slip suppression control is continued, and the period T2 is a period of waiting for a recovery of the gripping of the left driving wheel 14L. The period T3 is a period in which the gripping of the left driving wheel 14L is recovered, and the intervention of the slip suppression control is gradually released. The period T4 is a period in which the intervention of the slip suppression control has been released.

In the period T0, the target vehicle wheel speed limit range setting unit 48 sets the target vehicle wheel speed limit range, in a manner so that the required vehicle wheel speed $Vrc_{rl}$ and the required vehicle wheel speed $Vrc_{rr}$ are included within the target vehicle wheel speed limit range. In the case that the required vehicle wheel speed $Vrc_{rl}$ and the required vehicle wheel speed $Vrc_{rr}$ are included within the allowable slip range, the target vehicle wheel speed limit range setting unit 48 causes the target vehicle wheel speed limit range to coincide with the allowable slip range. In the case that the required vehicle wheel speed $Vrc_{rl}$ and the required vehicle wheel speed $Vrc_{rr}$ are not included within the allowable slip range, the target vehicle wheel speed limit range setting unit 48 sets the target vehicle wheel speed limit range to be larger than the allowable slip range. Therefore, in the period T0, the slip suppression control does not intervene, the target vehicle wheel speed $Vr_{rl}*$ of the left driving wheel 14L coincides with the required vehicle wheel speed $Vrc_{rl}$, and the target vehicle wheel speed $Vr_{rr}*$ of the right driving wheel 14R coincides with the required vehicle wheel speed $Vrc_{rr}$.

In the period T1, the target vehicle wheel speed limit range setting unit 48 brings the target vehicle wheel speed limit range closer to the allowable slip range. Consequently, although the required vehicle wheel speed $Vrc_{rl}$ of the left driving wheel 14L lies outside of the target vehicle wheel speed limit range, due to the intervention of the slip suppression control, the target vehicle wheel speed $Vr_{rl}*$ of the left driving wheel 14L is limited to the left target vehicle wheel speed lower limit value $Vrs_{rl.L}$.

In the period T1, the target vehicle wheel speed limit range setting unit 48 gradually brings the target vehicle wheel speed limit range closer to the allowable slip range. Provisionally, in the case that the target vehicle wheel speed limit range is suddenly returned to the allowable slip range, the magnitude of the yaw rate r^, after having temporarily become smaller, may become larger again. More specifically, since the turning speed of the vehicle 10 becomes greater again after having temporarily become smaller, there is a concern that a feeling of discomfort may be imparted to the occupant.

In the period T2, the target vehicle wheel speed limit range setting unit 48 maintains the target vehicle wheel speed limit range in a state in which the target vehicle wheel speed limit range coincides with the allowable slip range. Consequently, the intervention of the slip suppression control is continued, thereby maintaining the limitation on the target vehicle wheel speed $Vr_{rl}{}^*$ of the left driving wheel 14L, and waiting for the recovery of the gripping of the left driving wheel 14L.

In the period T3, the target vehicle wheel speed limit range setting unit 48 makes the target vehicle wheel speed limit range larger, and includes the required vehicle wheel speed $Vrc_{rl}$ and the required vehicle wheel speed $Vrc_{rr}$ within the target vehicle wheel speed limit range.

In the period T3, the target vehicle wheel speed limit range setting unit 48 gradually makes the target vehicle wheel speed limit range larger. Provisionally, in the case that the target vehicle wheel speed limit range were suddenly made larger, the left driving wheel 14L could slip again, and the intervention and releasing of the slip suppression control could be repeatedly carried out. Therefore, there is a concern that the vehicle 10 may repeatedly accelerate and decelerate in the frontward and rearward direction or in the turning direction, and a feeling of discomfort may be imparted to the occupant.

In the period T4, the target vehicle wheel speed limit range setting unit 48 sets the target vehicle wheel speed limit range, in a manner so that the required vehicle wheel speed $Vrc_{rl}$ and the required vehicle wheel speed $Vrc_{rr}$ are included within the target vehicle wheel speed limit range. In the case that the required vehicle wheel speed $Vrc_{rl}$ and the required vehicle wheel speed $Vrc_{rr}$ are included in the allowable slip range, the target vehicle wheel speed limit range setting unit 48 causes the target vehicle wheel speed limit range to coincide with the allowable slip range. In the case that the required vehicle wheel speed $Vrc_{rl}$ and the required vehicle wheel speed $Vrc_{rr}$ are not included within the allowable slip range, the target vehicle wheel speed limit range setting unit 48 sets the target vehicle wheel speed limit range to be larger than the allowable slip range. Therefore, in the period T4, the slip suppression control does not intervene, the target vehicle wheel speed $Vr_{rl}{}^*$ of the left driving wheel 14L coincides with the required vehicle wheel speed $Vrc_{rl}$, and the target vehicle wheel speed $Vr_{rr}{}^*$ of the right driving wheel 14R coincides with the required vehicle wheel speed $Vrc_{rr}$.

The left target vehicle wheel speed upper limit value $Vrs_{rl.H}$, the left target vehicle wheel speed lower limit value $Vrs_{rl.L}$, the right target vehicle wheel speed upper limit value $Vrs_{rr.H}$, and the right target vehicle wheel speed lower limit value $Vrs_{rr.L}$, which define the target vehicle wheel speed limit range, are expressed by the following Equation (21) to Equation (24) using a slip speed correction term St ($\geq 0$).

$$Vrs_{rl.H} = Vr_{rl.H} + St \quad \cdots (21)$$

$$Vrs_{rl.L} = Vr_{rl.L} - St \quad \cdots (22)$$

$$Vrs_{rr.H} = Vr_{rr.H} + St \quad \cdots (23)$$

$$Vrs_{rr.L} = Vr_{rr.L} - St \quad \cdots (24)$$

In the case that the slip speed correction term St is 0 (zero), the target vehicle wheel speed limit range coincides with the allowable slip range. The target vehicle wheel speed limit range setting unit 48 determines the slip speed correction term initial value St1 in a manner so that the target vehicle wheel speed limit range includes the required vehicle wheel speed $Vrc_{rl}$ and the required vehicle wheel speed $Vrc_{rr}$. The target vehicle wheel speed limit range setting unit 48, by causing the slip speed correction term St to be changed between 0 (zero) and the slip speed correction term initial value St1, adjusts the intervention of the slip suppression control.

Moreover, the slip speed correction term St with respect to the target vehicle wheel speed limit range of the left driving wheel 14L, and the slip speed correction term St with respect to the target vehicle wheel speed limit range of the right driving wheel 14R have the same value. Consequently, it is possible to equalize the effect due to the change in the target vehicle wheel limit range with respect to the target vehicle wheel speed $Vr_{rl}{}^*$ of the left driving wheel 14L and the target vehicle wheel speed $Vr_{rr}{}^*$ of the right driving wheel 14R.

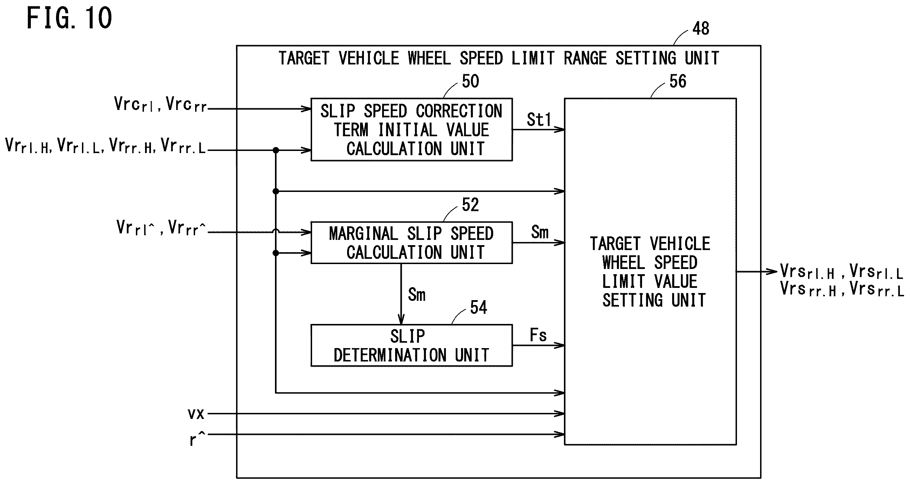

FIG. 10 is a block diagram of the target vehicle wheel speed limit range setting unit 48. The target vehicle wheel speed limit range setting unit 48 includes a slip speed correction term initial value calculation unit 50, a marginal slip speed calculation unit 52, a slip determination unit 54, and a target vehicle wheel speed limit value setting unit 56.

The slip speed correction term initial value calculation unit 50 calculates the slip speed correction term initial value St1, using the required wheel speed $Vrc_{rl}$, the required wheel speed $Vrc_{rr}$, the left slip determination upper limit value $Vr_{rl.H}$,

the left slip determination lower limit value $Vr_{rl.L}$, the right slip determination upper limit value $Vr_{rr.H}$, and the right slip determination lower limit value $Vr_{rr.L}$.

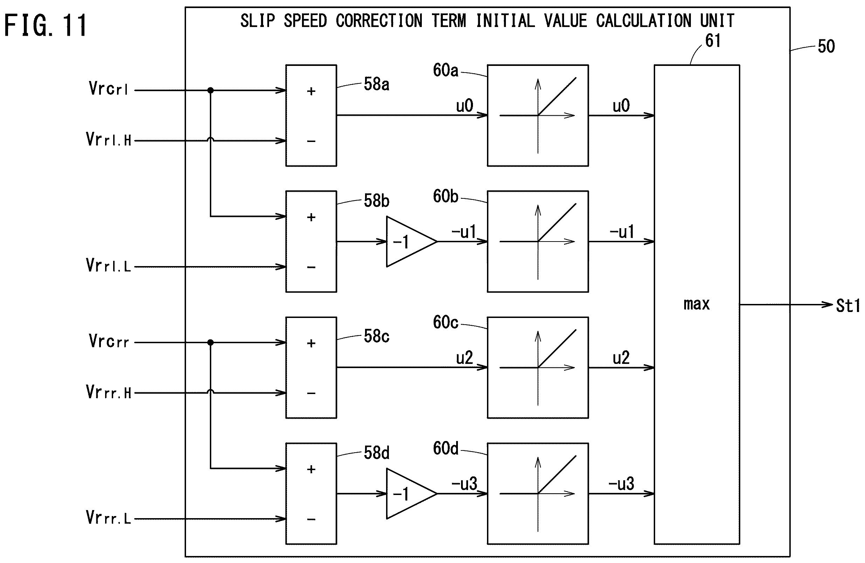

FIG. 11 is a block diagram of the slip speed correction term initial value calculation unit 50. In a deviation calculation unit 58a, a deviation u0 of the required vehicle wheel speed $Vrc_{rl}$ with respect to the left slip determination upper limit value $Vr_{rl.H}$ is calculated. In a deviation calculation unit 58b, a deviation u1 of the required vehicle wheel speed $Vrc_{rl}$ with respect to the left slip determination lower limit value $Vr_{rl.L}$ is calculated. In a deviation calculation unit 58c, a deviation u2 of the required vehicle wheel speed $Vrc_{rr}$ with respect to the right slip determination upper limit value $Vr_{rr.H}$ is calculated. In a deviation calculation unit 58d, a deviation u3 of the required vehicle wheel speed $Vrc_{rr}$ with respect to the left slip determination upper limit value $Vr_{rr.L}$ is calculated.

The deviation u0 is processed in a filter 60a, and if the deviation u0 is a positive value, it is output without change to a maximum value selection unit 61, and if the deviation u0 is a value less than or equal to 0 (zero), a value of 0 (zero) is output as the deviation u0 to the maximum value selection unit 61.

The deviation u1 is processed in a filter 60b after the sign thereof is inverted, and if the deviation -u1 is a positive value, it is output without change to the maximum value selection unit 61, and if the deviation -u1 is a value less than or equal to 0 (zero), a value of 0 (zero) is output as the deviation -u1 to the maximum value selection unit 61.

The deviation u2 is processed in a filter 60c, and if the deviation u2 is a positive value, it is output without change to the maximum value selection unit 61, and if the deviation u2 is a value less than or equal to 0 (zero), a value of 0 (zero) is output as the deviation u2 to the maximum value selection unit 61.

The deviation u3 is processed in a filter 60d after the sign thereof is inverted, and if the deviation -u3 is a positive value, it is output without change to the maximum value selection unit 61, and if the deviation -u3 is a value less than or equal to 0 (zero), a value of 0 (zero) is output as the deviation -u3 to the maximum value selection unit 61.

The maximum value selection unit 61 selects the largest value from among the deviation u0, the deviation -u1, the deviation u2, and the deviation -u3, and outputs the selected value as the slip speed correction term initial value St1.

The marginal slip speed calculation unit 52 calculates a marginal slip speed Sm. The marginal slip speed Sm is a marginal degree of the vehicle wheel speed with respect to a slip determination vehicle wheel speed. The marginal slip speed Sm is calculated by the following Equation (25).

$$Sm = min(Sm_{rl}, Sm_{rr}) \quad \cdots (25)$$

$$Sm_{rl} = \begin{cases} Vr_{rl.H} - Vr_{rl} \ (Vr_{rl} \geq 0.5(Vr_{rl.H} + Vr_{rl.L})) \\ Vr_{rl} - Vr_{rl.L} \ (Vr_{rl} < 0.5(Vr_{rl.H} + Vr_{rl.L})) \end{cases}$$

$$Sm_{rr} = \begin{cases} Vr_{rr.H} - Vr_{rr} \ (Vr_{rr} \geq 0.5(Vr_{rr.H} + Vr_{rr.L})) \\ Vr_{rr} - Vr_{rr.L} \ (Vr_{rr} < 0.5(Vr_{rr.H} + Vr_{rr.L})) \end{cases}$$

The slip determination unit 54 sets a slip determination flag Fs based on the marginal slip speed Sm. The slip determination flag Fs is set based on the following Equation (26).

$$Fs = \begin{cases} 0 \ (Sm \geq 0) \\ 1 \ (Sm < 0) \end{cases} \quad \cdots (26)$$

In the case that both the left driving wheel 14L and the right driving wheel 14R are gripping, the marginal slip speed Sm becomes greater than or equal to 0 (zero). In the case that at least one of the left driving wheel 14L or the right driving wheel 14R is slipping, the marginal slip speed Sm becomes smaller than 0 (zero). More specifically, in the case that both the left driving wheel 14L and the right driving wheel 14R are gripping, the slip determination flag becomes Fs = 0 (zero), whereas in the case that at least one of the left driving wheel 14L or the right driving wheel 14R is slipping, the slip determination flag becomes Fs = 1.

The target vehicle wheel speed limit value setting unit 56 sets the left target vehicle wheel speed upper limit value $Vrs_{rl.H}$, the left target vehicle wheel speed lower limit value $Vrs_{rl.L}$, the right target vehicle wheel speed upper limit value $Vrs_{rr.H}$, and the right target vehicle wheel speed lower limit value $Vrs_{rr.L}$.

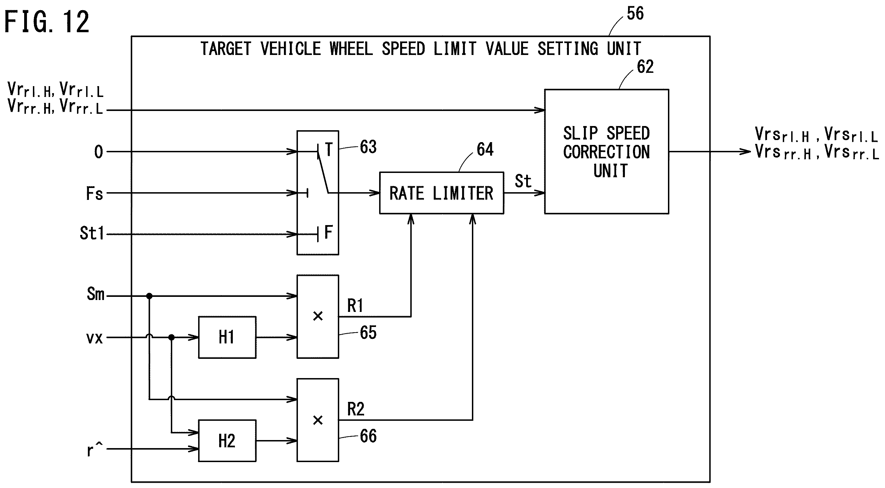

FIG. 12 is a block diagram of the target vehicle wheel speed limit value setting unit 56. The target vehicle wheel speed limit value setting unit 56 includes a slip speed correction unit 62, a selector 63, a rate limiter 64, an intervention rate limit value calculation unit 65, and a release rate limit value calculation unit 66.

Based on the aforementioned Equation (21) to Equation (24), the slip speed correction unit 62 calculates the left target vehicle wheel speed upper limit value $Vrs_{rl.H}$, the left target vehicle wheel speed lower limit value $Vrs_{rl.L}$, the right target vehicle wheel speed upper limit value $Vrs_{rr.H}$, and the right target vehicle wheel speed lower limit value $Vrs_{rr.L}$.

The selector 63 outputs 0 (zero) in the case that at least one of the left driving wheel 14L or the right driving wheel 14R is slipping (Fs = 0). The selector 63 outputs the slip speed correction term initial value St1 in the case that both the left driving wheel 14L and the right driving wheel 14R are gripping (Fs = 1).

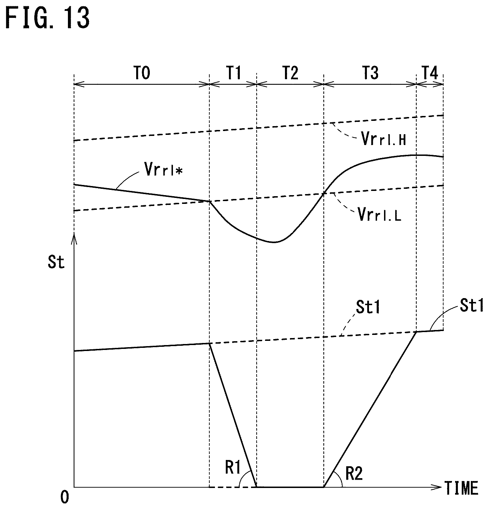

FIG. 13 is a diagram showing an example of a change over time of the slip speed correction term St. FIG. 13 shows an example of a case in which the slip suppression control intervenes with respect to the left driving wheel 14L. The periods T0 to T4 shown in FIG. 13 correspond to the periods T0 to T4 shown in FIG. 9.

In the case that the slip speed correction term St is caused to decrease (period T1), the rate limiter 64 limits the rate of decrease of the slip speed correction term St. Further, in the case that the slip speed correction term St is caused to increase (period T3), the rate limiter 64 limits the rate of increase of the slip speed correction term St. By limiting the rate of increase of the slip speed correction term St, a sudden change in the target vehicle wheel speed limit range is suppressed.

the intervention rate limit value calculation unit 65 calculates an intervention rate limit value R1. The intervention rate limit value R1 is a value that defines a maximum value of a rate of decrease of the slip speed correction term St. The rate limiter 64, based on the intervention rate limit value R1, limits the rate of decrease of the slip speed correction term St. The intervention rate limit value R1 can be determined by the following Equation (27).

$$R1 = H1 \cdot Sm \quad \cdots (27)$$

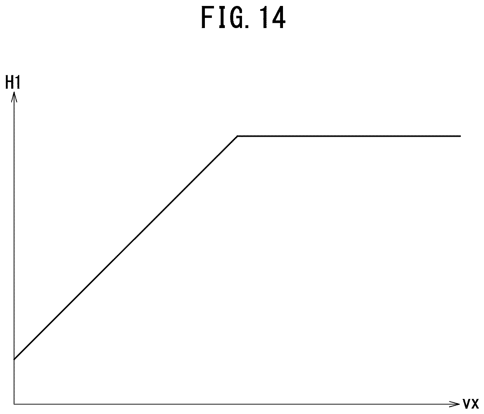

The term H1 in Equation (27) is a gain. FIG. 14 is a map of the gain H1. The gain H1 is set to a larger value as the vehicle body speed vx is greater. In the case that the driving wheels are slipping, the marginal slip speed Sm becomes a negative value, and as the slip ratio of the driving wheels becomes larger, the absolute value of the marginal slip speed Sm becomes larger. Therefore, as the slip ratio of the driving wheels becomes larger, and as the vehicle body speed vx becomes greater, the absolute value of the intervention rate limit value R1, whose value is negative, becomes greater. More specifically, in the case that the slip ratio of the driving wheels is large, the control amount of the slip suppression control is increased at an early stage, and thereby the behavior of the vehicle 10 is stabilized. Further, in a situation in which the vehicle body speed vx is great and the slip ratio of the driving wheels becomes even larger, the control amount of the slip suppression control is increased at an early stage, thereby suppressing the slip ratio of the driving wheels from becoming even larger.

The release rate limit value calculation unit 66 calculates a release rate limit value R2. The release rate limit value R2 is a value that defines a maximum value of a rate of increase of the slip speed correction term St. The rate limiter 64, based on the release rate limit value R2, limits the rate of increase of the slip speed correction term St. The release rate limit value

R2 can be determined by the following Equation (28).

$$R2 = H2 \cdot Sm \quad \cdots (28)$$

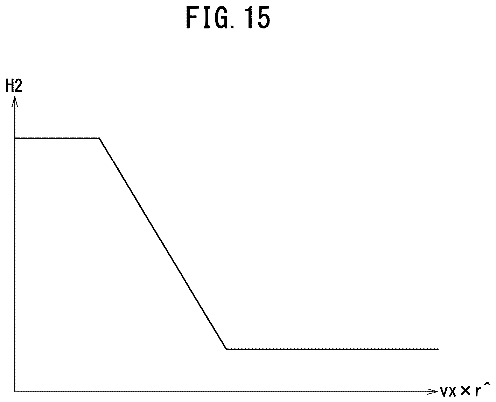

The term H2 in Equation (28) is a gain. FIG. 15 is a map of the gain H2. The gain H2 is set to a larger value as the vehicle body speed vx becomes smaller, and as the yaw rate r^ becomes smaller. In the case that the driving wheels are gripping, the marginal slip speed Sm becomes a positive value, and as the slip ratio of the driving wheels becomes smaller, the marginal slip speed Sm becomes greater. Therefore, as the slip ratio of the driving wheels becomes smaller, as the vehicle body speed vx becomes smaller, and as the yaw rate r^ becomes smaller, the absolute value of the release rate limit value R2, whose value is positive, becomes greater. More specifically, in the case that the slip ratio of the driving wheels is small, since the gripping of the driving wheels is recovered, the control amount of the slip suppression control is reduced at an early stage, and thereby the target vehicle speed V* and the target yaw rate r* are realized. Further, in the case that the vehicle body speed vx is small and the yaw rate r^ is small, since the possibility that the slip ratio of the driving wheels will further become larger is low, the control amount of the slip suppression control is reduced at an early stage, and thereby the target vehicle speed V* and the target yaw rate r* are realized.

[Driving Motor Control]

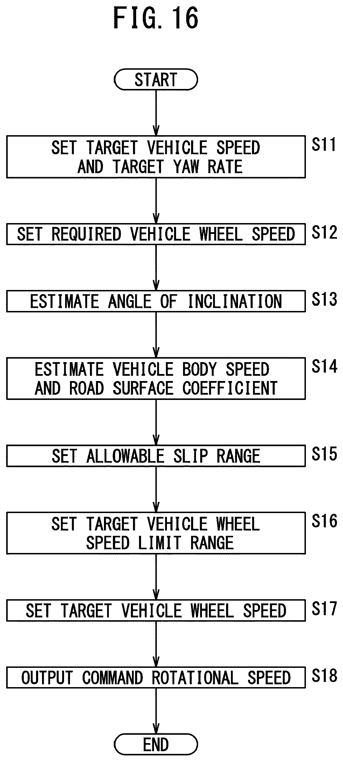

FIG. 16 is a flowchart of the driving motor control performed in the vehicle control device 26. The driving motor control is repeatedly executed at a predetermined cycle.

In step S11, the target value setting unit 32 sets the target vehicle speed V* and the target yaw rate r* based on an operated amount of the operating levers 18. Thereafter, the process transitions to step S12.

In step S12, the required vehicle wheel speed setting unit 46 sets the required vehicle wheel speed $Vrc_{rl}$ of the left driving wheel 14L and the required vehicle wheel speed $Vrc_{rr}$ of the right driving wheel 14R on the basis of an operated amount of the operating levers 18. Thereafter, the process transitions to step S13.

In step S13, the estimation unit 34 estimates the angle of inclination of the vehicle 10 based on the roll rate $p^{\wedge}$, the pitch rate $q^{\wedge}$, the yaw rate $r^{\wedge}$, the frontward and rearward acceleration $ax^{\wedge}$, the lateral acceleration $ay^{\wedge}$, and the upper and lower acceleration $az^{\wedge}$. Thereafter, the process transitions to step S14.

In step S14, the estimation unit 34 estimates the vehicle body speed vx, the road surface coefficient $\lambda_{rl}$, and the road surface coefficient $\lambda_{rr}$ based on the rotational speed $\theta'w_{rl}{}^{\wedge}$ and the driving torque $TD_{rl}{}^{\wedge}$ of the left driving wheel 14L, the rotational speed $\theta'w_{rr}{}^{\wedge}$ and the driving torque $TD_{rr}{}^{\wedge}$ of the right driving wheel 14R, the frontward and rearward acceleration $ax^{\wedge}$, and the yaw rate $r^{\wedge}$. Thereafter, the process transitions to step S15.

In step S15, the allowable slip range setting unit 36 calculates the left slip determination upper limit value $Vr_{rl.H}$ and the left slip determination lower limit value $Vr_{rl.L}$, and sets the allowable slip range of the left driving wheel 14L. Further, the allowable slip range setting unit 36 calculates the right slip determination upper limit value $Vr_{rr.H}$ and the right slip determination lower limit value $Vr_{rr.L}$, and sets the allowable slip range of the right driving wheel 14R. Thereafter, the process transitions to step S16.

In step S16, the target vehicle wheel speed limit range setting unit 48 calculates the left target vehicle wheel speed upper limit value $Vrs_{rl.H}$ and the left target vehicle wheel speed lower limit value $Vrs_{rl.L}$, and sets the target vehicle wheel speed limit range of the left driving wheel 14L. Further, the allowable slip range setting unit 36 calculates the right target vehicle wheel speed upper limit value $Vrs_{rr.H}$ and the right target vehicle wheel speed lower limit value $Vrs_{rr.L}$, and sets the target vehicle wheel speed limit range of the right driving wheel 14R. Thereafter, the process transitions to step S17.

In step S17, the target vehicle wheel speed setting unit 38 sets within the target vehicle wheel speed limit range of the left driving wheel 14L the target vehicle wheel speed $Vr_{rl}{}^{*}$ of the left driving wheel 14L, based on the target vehicle speed $V^{*}$ and the target yaw rate $r^{*}$. Further, the target vehicle wheel speed limit range setting unit 48 sets within the target vehicle wheel speed limit range of the right driving wheel 14R the target vehicle wheel speed $Vr_{rr}{}^{*}$ of the right driving wheel 14R, based on the target vehicle speed $V^{*}$ and the target yaw rate $r^{*}$. Thereafter, the process transitions to step S18.

In step S18, the rotational speed control unit 40 sets the rotational speed command value $\theta'dw_{rl}{}^{*}$ of the left driving motor 16L and the rotational speed command value $\theta'dw_{rr}{}^{*}$ of the right driving motor 16R, based on the target vehicle wheel speed $Vr_{rl}{}^{*}$ of the left driving wheel 14L, the target vehicle wheel speed $Vr_{rr}{}^{*}$ of the right driving wheel 14R, the rotational speed $\theta'w_{rl}{}^{*}$ of the left driving motor 16L, and the rotational speed $\theta'w_{rr}{}^{*}$ of the right driving motor 16R. The rotational speed control unit 40 outputs the rotational speed command value $\theta'dw_{rl}{}^{*}$ and the rotational speed command value $\theta'dw_{rr}{}^{*}$ to the motor driver 42. Thereafter, the driving motor control comes to an end.

(Third Embodiment)

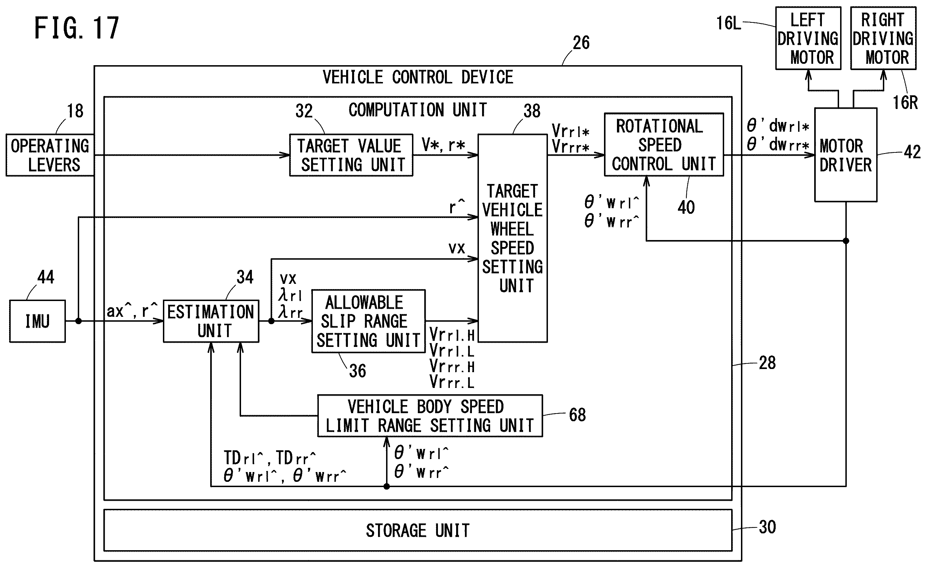

FIG. 17 is a block diagram of the vehicle control device 26. The vehicle control device 26 according to the present embodiment, in addition to the configuration of the vehicle control device 26 of the first embodiment, includes a vehicle body speed limit range setting unit 68. The vehicle body speed limit range setting unit 68 sets a vehicle body speed upper limit value vx.H, and a vehicle body speed lower limit value vx.L.

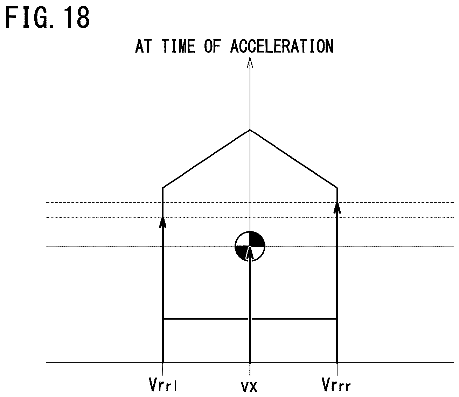

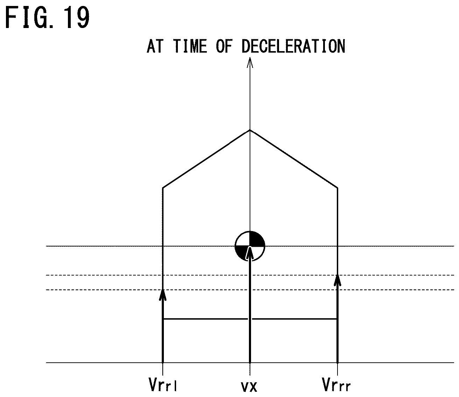

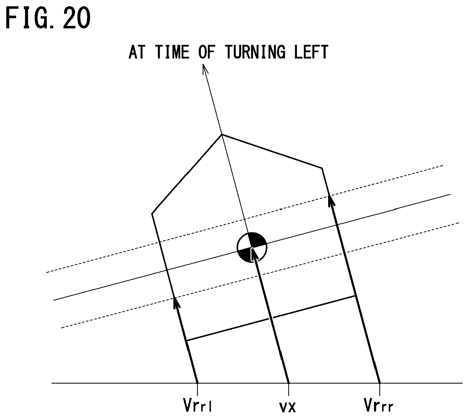

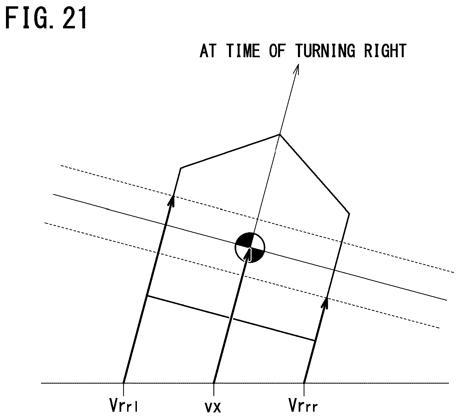

FIG. 18 to FIG. 21 are image diagrams showing a relationship between a vehicle body speed vx, a vehicle wheel speed $Vr_{rl}$ of the left driving wheel 14L, and a vehicle wheel speed $Vr_{rr}$ of the right driving wheel 14R. A length of the bold arrow shown in FIG. 18 to FIG. 21 indicates a magnitude of the vehicle body speed vx, a magnitude of the vehicle wheel speed $Vr_{rl}$, and a magnitude of the vehicle wheel speed $Vr_{rr}$. FIG. 18 shows a relationship at a time of acceleration, FIG. 19 shows a relationship at a time of deceleration, FIG. 20 shows a relationship at a time of turning left, and FIG. 21 shows a relationship at a time of turning right. Moreover, at the time of acceleration and at the time of deceleration, the vehicle 10 is traveling straight or is gradually turning.

At the time of acceleration, since a driving force is generated in a direction that causes the vehicle 10 to move forward in the left driving wheel 14L and the right driving wheel 14R, as shown in FIG. 18, the vehicle body speed vx becomes smaller than the vehicle wheel speed $Vr_{rl}$, and becomes smaller than the vehicle wheel speed $Vr_{rr}$. At the time of deceleration, since the vehicle 10 generates a braking force in the left driving wheel 14L and the right driving wheel 14R, as shown in FIG. 19, the vehicle body speed vx becomes greater than the vehicle wheel speed $Vr_{rl}$, and becomes greater than the vehicle wheel speed $Vr_{rr}$.

At a time of turning left, since a braking force is generated in the left driving wheel 14L, and a driving force is generated in the right driving wheel 14R, as shown in FIG. 20, the vehicle body speed vx becomes greater than the vehicle wheel speed $Vr_{rl}$, and becomes smaller than the vehicle wheel speed $Vr_{rr}$. At a time of turning right, since a driving force is generated in the left driving wheel 14L, and a braking force is generated in the right driving wheel 14R, as shown in FIG. 21, the vehicle body speed vx becomes smaller than the vehicle wheel speed $Vr_{rl}$, and becomes greater than the vehicle wheel speed $Vr_{rr}$.

However, in the case that the estimation accuracy of the vehicle body speed vx is low, there are cases in which the estimated vehicle body speed vx may not satisfy the relationship shown in FIG. 18 to FIG. 21. According to the present embodiment, in the case that the accuracy of the vehicle body speed vx estimated by the method described according to the first embodiment is low, the vehicle body speed vx is estimated by another method.

[Vehicle Body Speed Estimation Process]

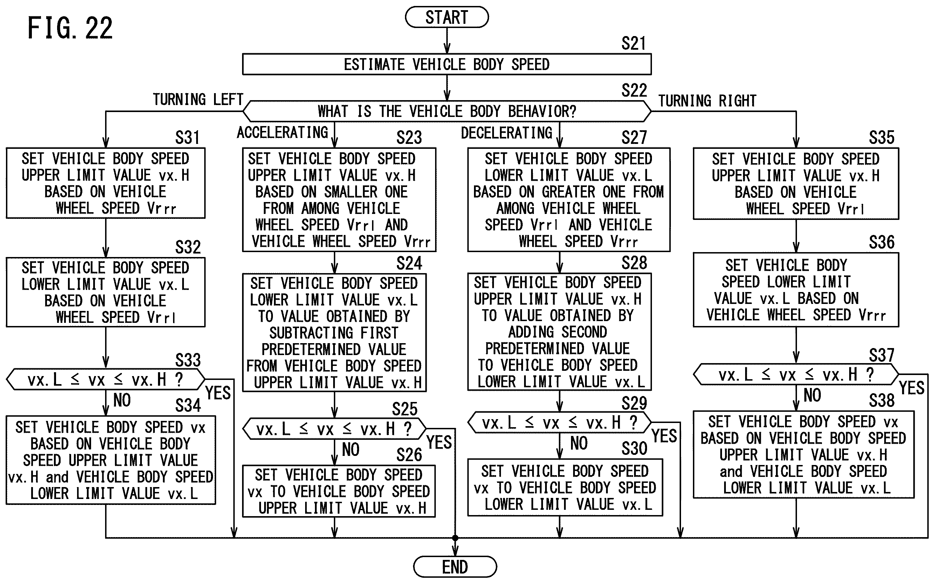

FIG. 22 is a flowchart of a vehicle body speed estimation process carried out in the vehicle control device 26. The vehicle body speed estimation process is carried out in step S3 (see FIG. 6) of the driving motor control according to the first embodiment, and in addition, in step S14 (see FIG. 16) of the driving motor control according to the second embodiment.
In step S21, the estimation unit 34 estimates the vehicle body speed vx. Thereafter, the process transitions to step S22. The estimation of the vehicle body speed vx in step S21 is carried out by the method that was described in the first embodiment.
In step S22, the estimation unit 34 determines the vehicle behavior. In the case it is determined that the vehicle 10 is accelerating, the process transitions to step S23.
In step S23, the vehicle body speed limit range setting unit 68 sets the vehicle body speed upper limit value vx.H based on the smaller one from among the vehicle wheel speed $Vr_{rl}$ of the left driving wheel 14L and the vehicle wheel speed $Vr_{rr}$ of the right driving wheel 14R. Thereafter, the process transitions to step S24.
In the case that the vehicle wheel speed $Vr_{rl}$ is smaller, the vehicle body speed upper limit value vx.H is set based on the following Equation (29). In the case that the vehicle wheel speed $Vr_{rr}$ is smaller, the vehicle body speed upper limit value vx.H is set based on the following Equation (30).

$$vx.H = Vr_{rl}\char94 + \frac{dr}{2}r\char94 \quad \cdots (29)$$

$$vx.H = Vr_{rr}\char94 - \frac{dr}{2}r\char94 \quad \cdots (30)$$

In step S24, the vehicle body speed limit range setting unit 68 sets to the vehicle body speed lower limit value vx.L a value obtained by subtracting a first predetermined value from the vehicle body speed upper limit value vx.H. Thereafter, the process transitions to step S25.
In step S25, the estimation unit 34 determines whether or not the estimated vehicle body speed vx is greater than or equal to the vehicle body speed lower limit value vx.L, and less than or equal to the vehicle body speed upper limit value vx.H. In the case that the estimated vehicle body speed vx is greater than or equal to the vehicle body speed lower limit value vx.L, and less than or equal to the vehicle body speed upper limit value vx.H, the vehicle body speed estimation process is terminated, and the process returns to the driving motor control. In the case that the estimated vehicle body speed vx is less than the vehicle body speed lower limit value vx.L, or alternatively, is greater than the vehicle body speed upper limit value vx.H, the process transitions to step S26.
In step S26, the estimation unit 34 sets the estimated value of the vehicle body speed vx to the vehicle body speed upper limit value vx.H. Thereafter, the vehicle body speed estimation process is terminated, and the process returns to the driving motor control.
In step S22, in the case that the estimation unit 34 determines that the vehicle 10 is decelerating, the process transitions to step S27.
In step S27, the vehicle body speed limit range setting unit 68 sets the vehicle body speed lower limit value vx.L based on the greater one from among the vehicle wheel speed $Vr_{rl}$ of the left driving wheel 14L and the vehicle wheel speed $Vr_{rr}$ of the right driving wheel 14R. Thereafter, the process transitions to step S28.
In the case that the vehicle wheel speed $Vr_{rl}$ is greater, the vehicle body speed lower limit value vx.L is set based on the following Equation (31). In the case that the vehicle wheel speed $Vr_{rr}$ is greater, the vehicle body speed lower limit value vx.L is set based on the following Equation (32).

$$vx.L = Vr_{rl}\char94 + \frac{dr}{2}r\char94 \quad \cdots (31)$$

$$vx.L = Vr_{rr}\char94 - \frac{dr}{2}r\char94 \quad \cdots (32)$$

In step S28, the vehicle body speed limit range setting unit 68 sets to the vehicle body speed upper limit value vx.H a value obtained by adding a second predetermined value to the vehicle body speed lower limit value vx.L. Thereafter, the process transitions to step S29. The magnitude of the second predetermined value may be the same as, or may be different from the magnitude of the first predetermined value.

In step S29, the estimation unit 34 determines whether or not the estimated vehicle body speed vx is greater than or equal to the vehicle body speed lower limit value vx.L, and less than or equal to the vehicle body speed upper limit value vx.H. In the case that the estimated vehicle body speed vx is greater than or equal to the vehicle body speed lower limit value vx.L, and less than or equal to the vehicle body speed upper limit value vx.H, the vehicle body speed estimation process is terminated, and the process returns to the driving motor control. In the case that the estimated vehicle body speed vx is less than the vehicle body speed lower limit value vx.L, or alternatively, is greater than the vehicle body speed upper limit value vx.H, the process transitions to step S30.

In step S30, the estimation unit 34 sets the estimated value of the vehicle body speed vx to the vehicle body speed lower limit value vx.L. Thereafter, the vehicle body speed estimation process is terminated, and the process returns to the driving motor control.

In step S22, in the case that the estimation unit 34 determines that the vehicle 10 is turning left, the process transitions to step S31.

In step S31, the vehicle body speed limit range setting unit 68 sets the vehicle body speed upper limit value vx.H based on the vehicle wheel speed $Vr_{rr}$ of the right driving wheel 14R. Thereafter, the process transitions to step S32. The vehicle body speed upper limit value vx.H is set based on the aforementioned Equation (30).

In step S32, the vehicle body speed limit range setting unit 68 sets the vehicle body speed lower limit value vx.L based on the vehicle wheel speed $Vr_{rl}$ of the left driving wheel 14L. Thereafter, the process transitions to step S33. The vehicle body speed lower limit value vx.L is set based on the aforementioned Equation (31).

In step S33, the estimation unit 34 determines whether or not the estimated vehicle body speed vx is greater than or equal to the vehicle body speed lower limit value vx.L, and less than or equal to the vehicle body speed upper limit value vx.H. In the case that the estimated vehicle body speed vx is greater than or equal to the vehicle body speed lower limit value vx.L, and less than or equal to the vehicle body speed upper limit value vx.H, the vehicle body speed estimation process is terminated, and the process returns to the driving motor control. In the case that the estimated vehicle body speed vx is less than the vehicle body speed lower limit value vx.L, or alternatively, is greater than the vehicle body speed upper limit value vx.H, the process transitions to step S34.

In step S34, the estimation unit 34 sets the estimated value of the vehicle body speed vx based on the vehicle body speed upper limit value vx.H and the vehicle body speed lower limit value vx.L. Thereafter, the vehicle body speed estimation process is terminated, and the process returns to the driving motor control. The estimated value of the vehicle body speed vx is set based on the following Equation (33).

$$vx = \begin{cases} vx.L(vx < vx.L) \\ vx.H(vx > vx.H) \end{cases} \cdots (33)$$

In step S22, in the case that the estimation unit 34 determines that the vehicle 10 is turning right, the process transitions to step S35.

In step S35, the vehicle body speed limit range setting unit 68 sets the vehicle body speed upper limit value vx.H based on the vehicle wheel speed $Vr_{rl}$ of the left driving wheel 14L. Thereafter, the process transitions to step S36. The vehicle body speed upper limit value vx.H is set based on the aforementioned Equation (29).

In step S36, the vehicle body speed limit range setting unit 68 sets the vehicle body speed lower limit value vx.L based on the vehicle wheel speed $Vr_{rr}$ of the right driving wheel 14R. Thereafter, the process transitions to step S37. The vehicle body speed lower limit value vx.L is set based on the aforementioned Equation (32).

In step S37, the estimation unit 34 determines whether or not the estimated vehicle body speed vx is greater than or equal to the vehicle body speed lower limit value vx.L, and less than or equal to the vehicle body speed upper limit value vx.H. In the case that the estimated vehicle body speed vx is greater than or equal to the vehicle body speed lower limit value vx.L, and less than or equal to the vehicle body speed upper limit value vx.H, the vehicle body speed estimation process is terminated, and the process returns to the driving motor control. In the case that the estimated vehicle body speed vx is less than the vehicle body speed lower limit value vx.L, or alternatively, is greater than the vehicle body speed upper limit value vx.H, the process transitions to step S38.

In step S38, the estimation unit 34 sets the estimated value of the vehicle body speed vx based on the vehicle body speed upper limit value vx.H and the vehicle body speed lower limit value vx.L. Thereafter, the vehicle body speed estimation process is terminated, and the process returns to the driving motor control. The estimated value of the vehicle body speed vx is set based on the aforementioned Equation (33).

In the above-described vehicle body speed estimation control, in the case that the vehicle body speed vx estimated by the method of the first embodiment is greater than the vehicle body speed upper limit value vx.H, or alternatively, is less than the vehicle body speed lower limit value vx.L, the estimation unit 34 estimates the vehicle body speed vx based on at least one of the vehicle body speed upper limit value vx.H, or the vehicle body speed lower limit value vx.L. In contrast thereto, in the case that the observed value used in the method of the first embodiment cannot be obtained, the estimation unit 34 may estimate the vehicle body speed vx based on at least one of the vehicle body speed upper limit value vx.H, or the vehicle body speed lower limit value vx.L. The aforementioned observed value is a value that is one or a plurality of values from among the driving torque $TD_{rl}{}^{\wedge}$ of the left driving wheel 14L, the driving torque $TD_{rr}{}^{\wedge}$ of the right driving wheel 14R, the frontward and rearward acceleration $ax^{\wedge}$ of the vehicle 10, and the yaw rate $r^{\wedge}$ of the vehicle 10.

In relation to the disclosure provided above, the following Supplementary Notes are further disclosed.

(Supplementary Note 1)

In the vehicle control device (26) configured to control the vehicle (10) including the left driving motor (16L) configured to drive the left driving wheel (14L), and the right driving motor (16R) configured to drive the right driving wheel (14R), the vehicle being capable of turning based on the difference between the vehicle wheel speed of the left driving wheel and the vehicle wheel speed of the right driving wheel, the vehicle control device includes the target value setting unit (32) configured to set the target vehicle speed and the target yaw rate, the allowable slip range setting unit (36) configured to set the allowable slip range of the left driving wheel based on the left slip determination upper limit value and the left slip determination lower limit value in order to determine the slip of the left driving wheel based on the vehicle wheel speed of the left driving wheel, and to set the allowable slip range of the right driving wheel based on the right slip determination upper limit value and the right slip determination lower limit value in order to determine the slip of the right driving wheel based on the vehicle wheel speed of the right driving wheel, the target vehicle wheel speed setting unit (38) configured to set the target wheel speed of the left driving wheel within the range corresponding to the allowable slip range of the left driving wheel based on the target vehicle speed and the target yaw rate, and to set the target wheel speed of the right driving wheel within the range corresponding to the allowable slip range of the right driving wheel based on the target vehicle speed and the target yaw rate, and the rotational speed control unit (40) configured to control the rotational speed of the left driving motor based on the target vehicle wheel speed of the left driving wheel, and to control the rotational speed of the right driving motor based on the target vehicle wheel speed of the right driving wheel. In accordance with such a configuration, slippage of the left driving wheel and the right driving wheel can be suppressed.

(Supplementary Note 2)

In the vehicle control device according to Supplementary Note 1, there may further be provided the target vehicle wheel speed limit range setting unit (48) configured to set the target vehicle wheel speed limit range that limits the target vehicle wheel speed of the left driving wheel in accordance with the allowable slip range of the left driving wheel, and configured to set the target vehicle wheel speed limit range that limits the target vehicle wheel speed of the right driving wheel in accordance with the allowable slip range of the right driving wheel, wherein the target vehicle wheel speed setting unit may set the target wheel speed of the left driving wheel within the target vehicle wheel speed limit range of the left driving wheel based on the target vehicle speed and the target yaw rate, and may set the target vehicle wheel speed of the right driving wheel within the target vehicle wheel speed limit range of the right driving wheel based on the target vehicle speed and the target yaw rate, in the case that both the vehicle wheel speed of the left driving wheel and the vehicle wheel speed of the right driving wheel are within the allowable slip range, the target vehicle wheel speed limit range setting unit may set the target vehicle wheel speed limit range to a range that is larger than the allowable slip range, and in the case that at least one of the vehicle wheel speed of the left driving wheel or the vehicle wheel speed of the right driving wheel is outside of the allowable slip range, the target vehicle wheel speed limit range setting unit may set the target vehicle wheel speed limit range to the same range as the allowable slip range. In accordance with such a configuration, in the case that both the left driving wheel and the right driving wheel are gripping, the target vehicle speed and the target yaw rate of the vehicle can be realized without the intervention of the slip suppression control. On the other hand, in the case that at least one of the left driving wheel or the right driving wheel has slipped, such slippage can be suppressed.

(Supplementary Note 3)

In the vehicle control device according to Supplementary Note 2, in the case that a change has been brought about from the state in which the vehicle wheel speed of the left driving wheel and the vehicle wheel speed of the right driving wheel are both within the allowable slip range to the state in which at least one of the vehicle wheel speed of the left driving wheel or the vehicle wheel speed of the right driving wheel is outside of the allowable slip range, the target vehicle wheel speed limit range setting unit may gradually bring the target vehicle wheel speed limit range closer to the allowable slip range. In accordance with such a configuration, the slip suppression control is gradually caused to intervene, thereby making it possible to stabilize the vehicle behavior.

(Supplementary Note 4)

In the vehicle control device according to Supplementary Note 2 or 3, in the case that a change has been brought about from the state in which at least one of the vehicle wheel speed of the left driving wheel or the vehicle wheel speed of the right driving wheel is outside of the allowable slip range to the state in which the vehicle wheel speed of the left driving wheel and the vehicle wheel speed of the right driving wheel are both within the allowable slip range, the target vehicle wheel speed limit range setting unit may gradually increase the target vehicle wheel speed limit range. In accordance with such a configuration, the intervention of the slip suppression control is gradually released, thereby making it possible to stabilize the vehicle behavior.

(Supplementary Note 5)

In the vehicle control device according to any one of Supplementary Notes 1 to 4, the vehicle control device may further be provided with the estimation unit (34) configured to estimate the vehicle body speed, the left road surface coefficient that is the road surface coefficient between the left driving wheel and the contact ground road surface, and the right road surface coefficient that is the road surface coefficient between the right driving wheel and the contact ground road surface, based on the rotational speed of the left driving wheel, the driving torque of the left driving wheel, the rotational speed of the right driving wheel, the driving torque of the right driving wheel, the frontward and rearward acceleration, and the yaw rate, wherein the allowable slip range setting unit may set the left slip determination upper limit value and the left slip determination lower limit value based on the vehicle body speed estimated value that is the vehicle body speed which has been estimated, and the left road surface coefficient estimated value that is the left road surface coefficient which has been estimated, and may set the right slip determination upper limit value and the right slip determination lower limit value based on the vehicle body speed estimated value, and the right road surface coefficient estimated value that is the right road surface coefficient which has been estimated. In accordance with such a configuration, the vehicle body speed can be estimated with high accuracy.

(Supplementary Note 6)

In the vehicle control device according to Supplementary Note 5, the first state equation that includes as state quantities the vehicle body speed estimated value, the left road surface coefficient estimated value, and the right road surface coefficient estimated value, and the observation equation that includes as observed quantities the observed value of the rotational speed of the left driving wheel, the observed value of the rotational speed of the right driving wheel, the observed value of the frontward and rearward acceleration, and the observed value of the yaw rate of the vehicle, may be set based on the dynamic model of the vehicle, the dynamic model of the left driving wheel, and the dynamic model of the right driving wheel, and the estimation unit may process the first state equation and the observation equation by the first parameter estimation method, and may thereby estimate the vehicle body speed, the left road surface coefficient, and the right road surface coefficient. In accordance with such a configuration, the vehicle body speed of the vehicle can be estimated with high accuracy.

(Supplementary Note 7)

In the vehicle control device according to Supplementary Note 6, the first state equation may include the estimated value of the angle of inclination of the vehicle, the second state equation that includes as the state quantity the estimated value of the angle of inclination, and the observation relational expression indicating the relationship between the observed value of the angle of inclination and the observed value of the acceleration of the vehicle, may be set based on the dynamic model of the vehicle, and the estimation unit may process the second state equation and the observation relational expression by the second parameter estimation method, and may thereby estimate the angle of inclination. In accordance with such a configuration, the angle of inclination of the vehicle can be estimated with high accuracy.

(Supplementary Note 8)

In the vehicle control device according to any one of Supplementary Notes 5 to 7, there may further be provided the vehicle body speed limit range setting unit (68) configured to set the vehicle body speed upper limit value that is the upper limit value of the vehicle body speed, and the vehicle body speed lower limit value that is the lower limit value of the vehicle body speed, based on the vehicle wheel speed of the left driving wheel, the vehicle wheel speed of the right driving wheel, and the yaw rate, wherein, in the case that the vehicle body speed which has been estimated is greater than the vehicle body speed upper limit value, or in the case that the vehicle body speed estimated value is smaller than the vehicle body speed lower limit value, the estimation unit may estimate the vehicle body speed based on at least one of the vehicle body speed upper limit value or the vehicle body speed lower limit value. In accordance with such a configuration, it is possible to suppress a decrease in the estimation accuracy of the vehicle body speed of the vehicle.

(Supplementary Note 9)

In the vehicle control device according to Supplementary Note 8, in the case that one or a plurality of values from among the driving torque of the left driving wheel, the driving torque of the right driving wheel, the frontward and rearward acceleration, and the yaw rate cannot be acquired, the estimation unit may estimate the vehicle body speed based on at least one of the vehicle body speed upper limit value or the vehicle body speed lower limit value. In accordance with such a configuration, it is possible to suppress a decrease in the estimation accuracy of the vehicle body speed of the vehicle.

(Supplementary Note 10)

The vehicle turns due to the difference between the vehicle wheel speed of the left driving wheel and the vehicle wheel speed of the right driving wheel, wherein the vehicle includes the vehicle control device according to any one of Supplementary Notes 1 to 9. In accordance with such a configuration, slippage of the left driving wheel and the right driving wheel can be suppressed.

(Supplementary Note 11)

In the vehicle control method for controlling the vehicle including the left driving motor configured to drive the left driving wheel, and the right driving motor configured to drive the right driving wheel, the vehicle being capable of turning based on the difference between the vehicle wheel speed of the left driving wheel and the vehicle wheel speed of the right driving wheel, the method includes the target value setting step of setting the target vehicle speed and the target yaw rate, the allowable slip range setting step of setting the allowable slip range of the left driving wheel based on the left slip determination upper limit value and the left slip determination lower limit value in order to determine the slip of the left driving wheel based on the vehicle wheel speed of the left driving wheel, and of setting the allowable slip range of the right driving wheel based on the right slip determination upper limit value and the right slip determination lower limit value in order to determine the slip of the right driving wheel based on the vehicle wheel speed of the right driving wheel, the target vehicle wheel speed setting step of setting the target wheel speed of the left driving wheel within the range corresponding to the allowable slip range of the left driving wheel based on the target vehicle speed and the target yaw rate, and of setting the target wheel speed of the right driving wheel within the range corresponding to the allowable slip range of the right driving wheel based on the target vehicle speed and the target yaw rate, and the rotational speed control step of controlling the rotational speed of the left driving motor based on the target vehicle wheel speed of the left driving wheel, and of controlling the rotational speed of the right driving motor based on the target vehicle wheel speed of the right driving wheel. In accordance with such a configuration, slippage of the left driving wheel and the right driving wheel can be suppressed.

Moreover, it should be noted that the present invention is not limited to the disclosure described above, and various configurations can be adopted therein without departing from the essence and gist of the present invention.

## Claims

1. A vehicle control device (26) configured to control a vehicle (10) including a left driving motor (16L) configured to drive a left driving wheel (14L), and a right driving motor (16R) configured to drive a right driving wheel (14R), the vehicle being capable of turning based on a difference between a vehicle wheel speed of the left driving wheel and a vehicle wheel speed of the right driving wheel, the vehicle control device comprising:

   a target value setting unit (32) configured to set a target vehicle speed and a target yaw rate;
   an allowable slip range setting unit (36) configured to set an allowable slip range of the left driving wheel based on a left slip determination upper limit value and a left slip determination lower limit value in order to determine a slip of the left driving wheel based on the vehicle wheel speed of the left driving wheel, and to set an allowable slip range of the right driving wheel based on a right slip determination upper limit value and a right slip determination lower limit value in order to determine a slip of the right driving wheel based on the vehicle wheel speed of the right driving wheel;
   a target vehicle wheel speed setting unit (38) configured to set a target wheel speed of the left driving wheel within a range corresponding to the allowable slip range of the left driving wheel based on the target vehicle speed and the target yaw rate, and to set a target wheel speed of the right driving wheel within a range corresponding to the allowable slip range of the right driving wheel based on the target vehicle speed and the target yaw rate; and

a rotational speed control unit (40) configured to control a rotational speed of the left driving motor based on the target vehicle wheel speed of the left driving wheel, and to control a rotational speed of the right driving motor based on the target vehicle wheel speed of the right driving wheel.

2. The vehicle control device according to claim 1, further comprising a target vehicle wheel speed limit range setting unit (48) configured to set a target vehicle wheel speed limit range that limits the target vehicle wheel speed of the left driving wheel in accordance with the allowable slip range of the left driving wheel, and configured to set a target vehicle wheel speed limit range that limits the target vehicle wheel speed of the right driving wheel in accordance with the allowable slip range of the right driving wheel,

wherein the target vehicle wheel speed setting unit sets the target wheel speed of the left driving wheel within the target vehicle wheel speed limit range of the left driving wheel based on the target vehicle speed and the target yaw rate, and sets the target vehicle wheel speed of the right driving wheel within the target vehicle wheel speed limit range of the right driving wheel based on the target vehicle speed and the target yaw rate,
in a case that both the vehicle wheel speed of the left driving wheel and the vehicle wheel speed of the right driving wheel are within the allowable slip range, the target vehicle wheel speed limit range setting unit sets the target vehicle wheel speed limit range to a range that is larger than the allowable slip range, and
in a case that at least one of the vehicle wheel speed of the left driving wheel or the vehicle wheel speed of the right driving wheel is outside of the allowable slip range, the target vehicle wheel speed limit range setting unit sets the target vehicle wheel speed limit range to a same range as the allowable slip range.

3. The vehicle control device according to claim 2, wherein, in a case that a change has been brought about from a state in which the vehicle wheel speed of the left driving wheel and the vehicle wheel speed of the right driving wheel are both within the allowable slip range to a state in which at least one of the vehicle wheel speed of the left driving wheel or the vehicle wheel speed of the right driving wheel is outside of the allowable slip range, the target vehicle wheel speed limit range setting unit gradually brings the target vehicle wheel speed limit range closer to the allowable slip range.

4. The vehicle control device according to claim 2, wherein, in a case that a change has been brought about from a state in which at least one of the vehicle wheel speed of the left driving wheel or the vehicle wheel speed of the right driving wheel is outside of the allowable slip range to a state in which the vehicle wheel speed of the left driving wheel and the vehicle wheel speed of the right driving wheel are both within the allowable slip range, the target vehicle wheel speed limit range setting unit gradually increases the target vehicle wheel speed limit range.

5. The vehicle control device according to claim 1, further comprising an estimation unit (34) configured to estimate a vehicle body speed, a left road surface coefficient that is a road surface coefficient between the left driving wheel and a contact ground road surface, and a right road surface coefficient that is a road surface coefficient between the right driving wheel and the contact ground road surface, based on a rotational speed of the left driving wheel, a driving torque of the left driving wheel, a rotational speed of the right driving wheel, a driving torque of the right driving wheel, a frontward and rearward acceleration, and a yaw rate, wherein the allowable slip range setting unit sets the left slip determination upper limit value and the left slip determination lower limit value based on a vehicle body speed estimated value that is the vehicle body speed which has been estimated, and a left road surface coefficient estimated value that is the left road surface coefficient which has been estimated, and sets the right slip determination upper limit value and the right slip determination lower limit value based on the vehicle body speed estimated value, and a right road surface coefficient estimated value that is the right road surface coefficient which has been estimated.

6. The vehicle control device according to claim 5, wherein a first state equation that includes as state quantities the vehicle body speed estimated value, the left road surface coefficient estimated value, and the right road surface coefficient estimated value, and an observation equation that includes as observed quantities an observed value of the rotational speed of the left driving wheel, an observed value of the rotational speed of the right driving wheel, an observed value of the frontward and rearward acceleration, and an observed value of the yaw rate of the vehicle, are set based on a dynamic model of the vehicle, a dynamic model of the left driving wheel, and a dynamic model of the right driving wheel, and
the estimation unit processes the first state equation and the observation equation by a first parameter estimation method, and thereby estimates the vehicle body speed, the left road surface coefficient, and the right road surface coefficient.

7. The vehicle control device according to claim 6, wherein the first state equation includes an estimated value of an angle of inclination of the vehicle,

a second state equation that includes as a state quantity the estimated value of the angle of inclination, and an observation relational expression indicating a relationship between the observed value of the angle of inclination and an observed value of an acceleration of the vehicle, are set based on the dynamic model of the vehicle, and the estimation unit processes the second state equation and the observation relational expression by a second parameter estimation method, and thereby estimates the angle of inclination.

8. The vehicle control device according to claim 5, further comprising a vehicle body speed limit range setting unit (68) configured to set a vehicle body speed upper limit value that is an upper limit value of the vehicle body speed, and a vehicle body speed lower limit value that is a lower limit value of the vehicle body speed, based on the vehicle wheel speed of the left driving wheel, the vehicle wheel speed of the right driving wheel, and the yaw rate, wherein, in a case that the vehicle body speed which has been estimated is greater than the vehicle body speed upper limit value, or in a case that the vehicle body speed estimated value is smaller than the vehicle body speed lower limit value, the estimation unit estimates the vehicle body speed based on at least one of the vehicle body speed upper limit value or the vehicle body speed lower limit value.

9. The vehicle control device according to claim 8, wherein, in a case that one or a plurality of values from among the driving torque of the left driving wheel, the driving torque of the right driving wheel, the frontward and rearward acceleration, and the yaw rate cannot be acquired, the estimation unit estimates the vehicle body speed based on at least one of the vehicle body speed upper limit value or the vehicle body speed lower limit value.

10. A vehicle comprising the vehicle control device according to any one of claims 1 to 9, and being capable of turning based on a difference between the vehicle wheel speed of the left driving wheel and the vehicle wheel speed of the right driving wheel.

11. A vehicle control method for controlling a vehicle including a left driving motor configured to drive a left driving wheel, and a right driving motor configured to drive a right driving wheel, the vehicle being capable of turning based on a difference between a vehicle wheel speed of the left driving wheel and a vehicle wheel speed of the right driving wheel, the method comprising:

a target value setting step of setting a target vehicle speed and a target yaw rate;
an allowable slip range setting step of setting an allowable slip range of the left driving wheel based on a left slip determination upper limit value and a left slip determination lower limit value in order to determine a slip of the left driving wheel based on the vehicle wheel speed of the left driving wheel, and of setting an allowable slip range of the right driving wheel based on a right slip determination upper limit value and a right slip determination lower limit value in order to determine a slip of the right driving wheel based on the vehicle wheel speed of the right driving wheel;
a target vehicle wheel speed setting step of setting a target wheel speed of the left driving wheel within a range corresponding to the allowable slip range of the left driving wheel based on the target vehicle speed and the target yaw rate, and of setting a target wheel speed of the right driving wheel within a range corresponding to the allowable slip range of the right driving wheel based on the target vehicle speed and the target yaw rate; and
a rotational speed control step of controlling a rotational speed of the left driving motor based on the target vehicle wheel speed of the left driving wheel, and of controlling a rotational speed of the right driving motor based on the target vehicle wheel speed of the right driving wheel.

FIG. 1

# FIG. 2

FIG. 2

FIG. 3

ACCELERATION

$Vr_{rl}, Vr_{rr}$

$Vrrl.H, Vrrr.H$

$Vrrl.L, Vrrr.L$

DECELERATION

FRONTWARD MOVEMENT

Vs

$Vcx_{rl}, Vcx_{rr}$

REARWARD MOVEMENT

DECELERATION

ALLOWABLE
SLIP RANGE

ACCELERATION

EP 4 691 829 A1

FIG. 4

VEHICLE SPEED

Vrl.H

Vrl.L

Vrr.H

Vrr.L

P1

P2

ALLOWABLE RANGE

P1a

P2a

P0

P3a

P3c

P3b

P3

P4

YAW RATE

LEFT TURNING

RIGHT TURNING

EP 4 691 829 A1

# FIG. 5

# FIG. 6

```
        ( START )
            │
            ▼
┌─────────────────────────┐
│  SET TARGET VEHICLE SPEED│  S1
│   AND TARGET YAW RATE    │
└─────────────────────────┘
            │
            ▼
┌─────────────────────────┐
│ ESTIMATE ANGLE OF INCLINATION │  S2
└─────────────────────────┘
            │
            ▼
┌─────────────────────────┐
│ ESTIMATE VEHICLE BODY SPEED │  S3
│ AND ROAD SURFACE COEFFICIENT│
└─────────────────────────┘
            │
            ▼
┌─────────────────────────┐
│  SET ALLOWABLE SLIP RANGE│  S4
└─────────────────────────┘
            │
            ▼
┌─────────────────────────┐
│ SET TARGET VEHICLE WHEEL SPEED │  S5
└─────────────────────────┘
            │
            ▼
┌─────────────────────────┐
│ OUTPUT COMMAND ROTATIONAL SPEED │  S6
└─────────────────────────┘
            │
            ▼
        ( END )
```

# FIG. 7

VEHICLE SPEED

Vrr.H

Vrl.H

P1

ALLOWABLE RANGE

P2

Vrl.L

P0

Vrr.L

P3

YAW
RATE

LEFT TURNING

RIGHT TURNING

EP 4 691 829 A1

# FIG. 8

EP 4 691 829 A1

# FIG. 9

# FIG. 10

FIG. 10

TARGET VEHICLE WHEEL SPEED LIMIT RANGE SETTING UNIT ⌐48

$Vrc_{rl}, Vrc_{rr}$ ──→ **SLIP SPEED CORRECTION TERM INITIAL VALUE CALCULATION UNIT** ⌐50 — St1 →

$Vr_{rl.H}, Vr_{rl.L}, Vr_{rr.H}, Vr_{rr.L}$ ──→

$Vr_{rl}\hat{}, Vr_{rr}\hat{}$ ──→ **MARGINAL SLIP SPEED CALCULATION UNIT** ⌐52 — Sm →

Sm ↓

**SLIP DETERMINATION UNIT** ⌐54 — Fs →

**TARGET VEHICLE WHEEL SPEED LIMIT VALUE SETTING UNIT** ⌐56 ──→ $Vrs_{rl.H}, Vrs_{rl.L}$ $Vrs_{rr.H}, Vrs_{rr.L}$

vx ──→

r$\hat{}$ ──→

EP 4 691 829 A1

EP 4 691 829 A1

**FIG. 11**

SLIP SPEED CORRECTION TERM INITIAL VALUE CALCULATION UNIT — 50

61

Vrcrl → • → [+ / − 58a] → u0 → [60a] → u0 →

Vrrl.H →

Vrrl.L → [+ / − 58b] → [−1] → −u1 → [60b] → −u1 →

Vrcrr → • → [+ / − 58c] → u2 → [60c] → u2 →

Vrrr.H →

Vrrr.L → [+ / − 58d] → [−1] → −u3 → [60d] → −u3 →

max → St1

# FIG. 12

TARGET VEHICLE WHEEL SPEED LIMIT VALUE SETTING UNIT — 56

Inputs: $Vr_{rl.H}, Vr_{rl.L}$, $Vr_{rr.H}, Vr_{rr.L}$

0, Fs, St1 → switch (T/F) — 63

Sm, Vx → H1 → × (R1) — 65

Vx, $\hat{r}$ → H2 → × (R2) — 66

→ RATE LIMITER — 64 → St → SLIP SPEED CORRECTION UNIT — 62

Outputs: $Vrs_{rl.H}, Vrs_{rl.L}$, $Vrs_{rr.H}, Vrs_{rr.L}$

EP 4 691 829 A1

FIG. 13

# FIG. 14

# FIG. 15

# FIG. 16

START

| SET TARGET VEHICLE SPEED AND TARGET YAW RATE | S11 |

| SET REQUIRED VEHICLE WHEEL SPEED | S12 |

| ESTIMATE ANGLE OF INCLINATION | S13 |

| ESTIMATE VEHICLE BODY SPEED AND ROAD SURFACE COEFFICIENT | S14 |

| SET ALLOWABLE SLIP RANGE | S15 |

| SET TARGET VEHICLE WHEEL SPEED LIMIT RANGE | S16 |

| SET TARGET VEHICLE WHEEL SPEED | S17 |

| OUTPUT COMMAND ROTATIONAL SPEED | S18 |

END

# FIG. 17

EP 4 691 829 A1

FIG. 18

AT TIME OF ACCELERATION

Vrrl        vx        Vrrr

FIG. 19

AT TIME OF DECELERATION

Vrrl    vx    Vrrr

# FIG. 20

AT TIME OF TURNING LEFT

Vrrl          vx          Vrrr

# FIG. 21

AT TIME OF TURNING RIGHT

Vrrl          vx          Vrrr

# FIG. 22

START

→ **S21** ESTIMATE VEHICLE BODY SPEED

→ **S22** WHAT IS THE VEHICLE BODY BEHAVIOR?

TURNING LEFT / ACCELERATING / DECELERATING / TURNING RIGHT

**TURNING LEFT:**

**S31** SET VEHICLE BODY SPEED UPPER LIMIT VALUE vx.H BASED ON VEHICLE WHEEL SPEED Vrrr

**S32** SET VEHICLE BODY SPEED LOWER LIMIT VALUE vx.L BASED ON VEHICLE WHEEL SPEED Vrrl

**S33** vx.L ≤ vx ≤ vx.H ?
NO → **S34** SET VEHICLE BODY SPEED vx BASED ON VEHICLE BODY SPEED UPPER LIMIT VALUE vx.H and VEHICLE BODY SPEED LOWER LIMIT VALUE vx.L
YES →

**ACCELERATING:**

**S23** SET VEHICLE BODY SPEED UPPER LIMIT VALUE vx.H BASED ON SMALLER ONE FROM AMONG VEHICLE WHEEL SPEED Vrrl AND VEHICLE WHEEL SPEED Vrrr

**S24** SET VEHICLE BODY SPEED LOWER LIMIT VALUE vx.L TO VALUE OBTAINED BY SUBTRACTING FIRST PREDETERMINED VALUE FROM VEHICLE BODY SPEED UPPER LIMIT VALUE vx.H

**S25** vx.L ≤ vx ≤ vx.H ?
NO → **S26** SET VEHICLE BODY SPEED vx TO VEHICLE BODY SPEED UPPER LIMIT VALUE vx.H
YES →

**DECELERATING:**

**S27** SET VEHICLE BODY SPEED LOWER LIMIT VALUE vx.L BASED ON GREATER ONE FROM AMONG VEHICLE WHEEL SPEED Vrrl AND VEHICLE WHEEL SPEED Vrrr

**S28** SET VEHICLE BODY SPEED UPPER LIMIT VALUE vx.H TO VALUE OBTAINED BY ADDING SECOND PREDETERMINED VALUE TO VEHICLE BODY SPEED LOWER LIMIT VALUE vx.L

**S29** vx.L ≤ vx ≤ vx.H ?
NO → **S30** SET VEHICLE BODY SPEED vx TO VEHICLE BODY SPEED LOWER LIMIT VALUE vx.L
YES →

**TURNING RIGHT:**

**S35** SET VEHICLE BODY SPEED UPPER LIMIT VALUE vx.H BASED ON VEHICLE WHEEL SPEED Vrrl

**S36** SET VEHICLE BODY SPEED LOWER LIMIT VALUE vx.L BASED ON VEHICLE WHEEL SPEED Vrrr

**S37** vx.L ≤ vx ≤ vx.H ?
NO → **S38** SET VEHICLE BODY SPEED vx BASED ON VEHICLE BODY SPEED UPPER LIMIT VALUE vx.H and VEHICLE BODY SPEED LOWER LIMIT VALUE vx.L
YES →

END

EP 4 691 829 A1

## INTERNATIONAL SEARCH REPORT

| International application No. |
| --- |
| **PCT/JP2024/011906** |

| A. | CLASSIFICATION OF SUBJECT MATTER |
| --- | --- |

**B60L 15/20**(2006.01)i; **B60L 9/18**(2006.01)i
FI: B60L15/20 Y; B60L9/18 P; B60L9/18 S; B60L15/20 S

According to International Patent Classification (IPC) or to both national classification and IPC

| B. | FIELDS SEARCHED |
| --- | --- |

Minimum documentation searched (classification system followed by classification symbols)

B60L15/20; B60L9/18

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| Y | JP 6479627 B2 (KUBOTA CORPORATION) 06 March 2019 (2019-03-06) paragraphs [0012]-[0035], fig. 1-4 | 1, 10-11 |
| A | | 2-9 |
| Y | JP 2015-192471 A (NISSAN MOTOR CO., LTD.) 02 November 2015 (2015-11-02) paragraphs [0053]-[0066], fig. 5 | 1, 10-11 |

☐ Further documents are listed in the continuation of Box C.      ☑ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **06 June 2024** | **18 June 2024** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

**INTERNATIONAL SEARCH REPORT**
Information on patent family members

International application No.

**PCT/JP2024/011906**

| Patent document cited in search report | | | Publication date (day/month/year) | Patent family member(s) | Publication date (day/month/year) |
|---|---|---|---|---|---|
| JP | 6479627 | B2 | 06 March 2019 | US 2017/0120755 A1 paragraphs [0026]-[0056], fig. 1-4 | |
| JP | 2015-192471 | A | 02 November 2015 | (Family: none) | |

Form PCT/ISA/210 (patent family annex) (July 2022)

**REFERENCES CITED IN THE DESCRIPTION**

**Patent documents cited in the description**

- JP 6479627 B